# EUROPÄISCHE PATENTANMELDUNG

(11) **EP 2 144 324 A1**
(43) Veröffentlichungstag der Anmeldung: **13.01.2010**
(21) Anmeldenummer: 09008936.8
(22) Anmeldetag: 08.07.2009
(51) Int. Cl.: H01M 10/50, H01M 2/30, H01M 2/26, H01M 2/20

(54) **Nach galvanischen Prinzipien arbeitende elektrische Einrichtung**

(30) Priorität: 09.07.2008 DE 102008032263
(71) Anmelder: Li-Tec Battery GmbH, 01917 Kamenz (DE)
(72) Erfinder: Schäfer, Tim, 99762 Niedersachswerfen (DE); Gutsch, Andreas, Dr., 59348 Lüdinghausen (DE); Brasse, Claudia, Dr., 63452 Hanau (DE)
(74) Vertreter: Wallinger, Michael

(57) **Zusammenfassung**

Die Erfindung betrifft eine Einrichtung (10, 20), die nach galvanischen Prinzipien arbeitet, wie insbesondere eine Batterie bzw. ein Akkumulator, insbesondere eine Lithiumionenbatterie, und Zusammenbauten davon. Die Einrichtung umfasst ein Gehäuse (12), mindestens einen ersten Stromableiter (14), der aus dem Gehäuse (12) herausragt, und mindestens eine erste Wärmeabfuhreinrichtung (24), die in Wärmeflusskommunikation mit dem ersten Stromableiter (14) verbunden ist und so ausgebildet ist, dass sie thermische Energie von dem ersten Stromableiter (14) ableiten kann.

In einem Basisflachmodul sind eine erste Einrichtung (110) und eine Einrichtung (120) so angeordnet, dass das erste Gehäuse (112) der ersten Einrichtung (110) in einer gemeinsamen Ebene mit dem zweiten Gehäuse (113) der zweiten Einrichtung (120) angeordnet ist und dass die Gehäusefläche der ersten Einrichtung, aus der der zweite Stromableiter der ersten Einrichtung herausragt, der Gehäusefläche der zweiten Einrichtung, aus der der erste Stromableiter der zweiten Einrichtung herausragt, zugewandt ist, wobei der zweite Stromableiter (116) der ersten Einrichtung (110) mit dem ersten Stromableiter (115) der zweiten Einrichtung (120) in elektrischem Kontakt verbunden sein kann. Eine Wärmeabfuhreinrichtung (124) ist zum Ableiten von thermischer Energie in Wärmeflusskommunikation mit dem zweiten Stromableiter (116) der ersten Einrichtung (110) oder mit dem ersten Stromableiter (115) der zweiten Einrichtung (120) verbunden.

Mehrere Einrichtungen und/oder Basisflachmodule können in Stapeln bzw. nebeneinander angeordneten Stapeln, in elektrischer Serien- oder Parallelschaltung, räumlich kompakt zusammengebaut werden, wobei Wärme mittels der Wärmeabfuhreinrichtungen von den Stromableitern abgeführt werden kann.

## Beschreibung

Die vorliegende Erfindung betrifft eine nach galvanischen Prinzipien arbeitende Einrichtung, wie insbesondere eine Batterie bzw. ein Akkumulator, insbesondere eine Lithiumionenbatterie.

In der jüngsten Zeit entwickelte Batterien bzw. Akkumulatoren, insbesondere Lithiumionenbatterien, zeichnen sich durch eine hohe Energiespeicherdichte aus. Dies ermöglicht einerseits das Bereitstellen von hohen Ladungs- bzw. Stromkapazitäten, führt jedoch andererseits sowohl beim Aufladen der Batterie bzw. des Akkumulators als auch beim Entladen zu einer Erwärmung im Lade- bzw. Endladebetrieb der Batterie bzw. des Akkumulators. Übermäßige Erwärmungen führen zu einer Verringerung der Kapazität der Batterie bzw. des Akkumulators, Verschlechterung der Wiederaufladbarkeit und Verringerung der Zahl der möglichen Entlade- und Wiederaufladezyklen, mit anderen Worten der Lebensdauer der Batterie bzw. des Akkumulators. Insbesondere bei Lithiumionenbatterien ist dem Fachmann das Problem des "Thermal Run-Away" bekannt, bei dem ab einer gewissen Schwellwerttemperatur bzw. einer gewissen Wärmeerzeugungsleistung die Temperaturzunahme sich selbst verstärkt und wenn diesem Prozess nicht entgegengewirkt wird, zu einer Selbstzerstörung der Lithiumionenbatterie führt. Die mit Erwärmung zusammenhängenden Probleme treten verstärkt auf bei Einrichtungen mit hoher Energiespeicherdichte und hoher Kapazität, beispielsweise auch bei gestapelten Anordnungen von Batterien bzw. Akkumulatoren, bei denen die Wärmeabfuhr über die Gehäusewände der Einrichtungen eingeschränkt ist.

Der vorliegenden Erfindung liegt die Aufgabe zugrunde, der Erwärmung von nach galvanischen Prinzipien arbeitenden Einrichtungen entgegenzuwirken.

Die Aufgabe wird gelöst durch eine Einrichtung, die nach galvanischen Prinzipien arbeitet, wie insbesondere eine Batterie bzw. ein Akkumulator, insbesondere eine Lithiumionenbatterie, mit einem Gehäuse und mindestens einem ersten Stromableiter, der aus dem Gehäuse herausragt, und die dadurch gekennzeichnet ist, dass sie mindestens eine Wärmeabfuhreinrichtung umfasst, die in Wärmeflusskommunikation mit dem ersten Stromableiter verbunden ist und die so ausgebildet ist, dass sie thermische Energie von dem ersten Stromableiter ableiten kann. Durch die Wärmeflusskommunikation mit dem ersten Stromableiter, der wiederum mit den im Inneren der des Gehäuses der Einrichtung angeordneten Elektroden elektrisch verbunden sind, wird Wärme aus dem Inneren der Einrichtung über den ersten Stromableiter und die erste Wärmeabfuhreinrichtung abgeleitet, zusätzlich zu der Wärmeableitung aus dem Inneren durch Wärmeleitung und Abstrahlung über die Gehäuseflächen bzw. -wänden.

Unter dem Begriff Batterie ist vorliegend ein Behälter zu verstehen, der aus einer oder mehreren internen Zellen bzw. elektrischen Speicherzellen besteht, in denen chemische Energie in Elektrizität bzw. elektrische Energie umgewandelt wird, und der als eine Quelle elektrischer Leistung benutzt wird.

Unter dem Begriff Akkumulator ist vorliegend eine wiederaufladbare Zelle bzw. elektrische Speicherzelle oder Batterie zu verstehen, die als Quelle elektrischer Leistung benutzt wird.

Unter dem Begriff Stromableiter ist vorliegend eine elektrischen Strom leitende Vorrichtung zu verstehen, die an einer Elektrode, beispielsweise der Kathode und der Anode, in einer elektrischen Speicherzelle erzeugte elektrische Ladung bzw. Strom von der Elektrode, gegebenenfalls unter Hindurchführen durch eine Zellengehäusewand, nach außerhalb der Zelle leitet. Die Strom leitende Vorrichtung kann beispielsweise eine aus elektrisch leitfähigem Material, insbesondere aus einem Metall oder einer Metalllegierung, hergestellter Leitungsdraht oder ein Leitungsblech sein. In der Zelle kann ein inneres Ende des Stromableiters in elektrisch leitender Verbindung an die Elektrode angeschlossen sein. Außerhalb der Zelle kann ein anderes Ende der elektrisch leitenden Vorrichtung elektrisch leitend mit einem Anschluss zum Abgreifen bzw. Bereitstellen des elektrischen Stroms und zum Anschließen einer Steck- oder Klemmverbindung verbunden sein oder direkt als ein derartiger Anschluss ausgebildet sein.

Unter dem Begriff Wärmeflusskommunikation ist vorliegend eine Verbindung bzw. Kopplung von zwei Elementen zu verstehen, beispielweise von einer Wärmeabfuhreinrichtung mit einem Stromableiter, die so ausgeführt ist, dass ein Wärmefluss von dem einen zu dem anderen Element effektiv, d.h. mit guter Wärmeleitung und niedrigem Widerstand für den Wärmefluss, übertragen wird. Die Wärmeflusskommunikation kann durch eine innige, vorzugsweise flächige, insbesondere formschlüssige und/oder kraftschlüssige Verbindung zwischen Oberflächen der gekoppelten Elemente bereitgestellt werden. Zwischen den Elementen kann auch eine thermisch leitfähige Folie und/oder Schicht bereitgestellt werden, die so, insbesondere weich und/oder flexibel, ausgebildet ist, dass Unebenheiten von Berührungsoberflächen der gekoppelten Elemente ausgeglichen werden und der Kontakt zwischen den Berührungsoberflächen noch inniger wird.

Unter dem Begriff Wärmeabfuhreinrichtung ist vorliegend eine aus einem wärmeleitenden Material hergestellte Vorrichtung zum Ableiten bzw. Abführen von thermischer Energie (Wärmeenergie) von einem ersten Ort zu verstehen, wo beispielsweise einer Erwärmung entgegengewirkt oder eine Kühlung, beispielsweise eines Gegenstands, bewirkt wird, zu einem zweiten anderen Ort, wo die Wärmeenergie dissipieren kann, z.B. in eine andere Energieform umgewandelt oder zerstreut werden kann, insbesondere beispielsweise eine Wärmesenke, z.B. ein Wärme- oder Kältereservoir, wie etwa ein Flüssigkeitsbad, beispielsweise ein Kühlwasserreservoir oder -strom bzw. ein Temperaturreservoir, insbesondere eines mit Temperierung. Der Anschluss an bzw. die Verbindungen der Wärmeabfuhreinrichtung mit dem ersten Ort, beispielsweise einem zu kühlenden Gegenstand, und der Anschluss bzw. die Verbindung mit der Wärmesenke sollte gut wärmeleitend ausgeführt sein.

Vorzugsweise umfasst die Einrichtung mindestens einen zweiten Stromableiter, der aus dem Gehäuse herausragt, und mindestens eine zweite Wärmeabfuhreinrichtung, die in Wärmeflusskommunikation mit dem zweiten Stromableiter verbunden ist und so ausgebildet ist, dass sie thermische Energie von dem zweiten Stromableiter ableiten kann. Durch die zweite Wärmeabfuhrrichtung kann über den zweiten Stromableiter eine noch bessere bzw. effizientere Wärmeabführung aus dem Inneren des Gehäuses der Einrichtung über beide Stromableiter und damit von den beiden mit diesen Stromableitern verbundenen, im Inneren des Gehäuses angeordneten Elektroden erzielt werden.

Vorzugsweise ragt der erste Stromableiter aus einer ersten Gehäusefläche des Gehäuses heraus und der zweite Stromableiter ragt aus einer zweiten Gehäusefläche des Gehäuses heraus, wobei die zweite Gehäusefläche gegenüberliegend zu der ersten Gehäusefläche angeordnet ist. Diese Anordnung bzw. Geometrie ermöglicht ein direktes Hintereinanderschalten der Einrichtung, insbesondere eine Serienschaltung von Einrichtungen, wobei für jeweils benachbarte Einrichtungen ein zweiter Stromableiter der einen ersten Einrichtung mit dem ersten Stromableiter einer benachbarten zweiten Einrichtung über eine kurze elektrische Verbindungsstrecke bzw. vorzugsweise auch durch direkten elektrisch leitenden Kontakt des ersten mit dem zweiten Stromableiter verbunden wird.

Vorzugsweise sind für die erste Wärmeabfuhreinrichtung bzw. die zweite Wärmeabfuhreinrichtung die Wärmeflusskommunikation dadurch hergestellt, dass diese jeweils formschlüssig und/oder kraftschlüssig mit dem ersten bzw. zweiten Stromableiter verbunden sind. Die form- und/oder kraftschlüssige Verbindung zwischen der Wärmeabfuhreinrichtung und dem Stromableiter verringert die Wärmetransportverluste, mit anderen Worten verbessert die Wärmeübertragung von dem Stromableiter auf die Wärmeabfuhreinrichtung.

Bei der Verbindung einer Wärmeabfuhrvorrichtung mit einem Stromableiter zur Herstellung der Wärmeflusskommunikation wird sichergestellt, dass die Verbindung elektrisch isolierend ist, so dass über die Wärmeabfuhrvorrichtung von dem Stromableiter Wärmeenergie bzw. Wärmefluss, jedoch im Wesentlichen kein Strom, abgeführt wird. Zu diesem Zweck kann zwischen der Wärmeabfuhrvorrichtung und dem Stromableiter eine elektrisch isolierende Schicht bzw. Folie vorgesehen werden.

Vorzugsweise weist zumindest der aus dem Gehäuse herausragende Teil des ersten Stromableiters eine langgestreckte Form auf. Die langgestreckte Form ermöglicht bei der Wärmeflusskommunikation eine große Übertragungsfläche und damit eine gute Wärmeübertragung bzw. einen geringen Wärmetransportwiderstand. Vorzugsweise ist ferner der aus dem Gehäuse herausragende Teil eines Stromableiters entlang der langen Abmessung des Stromableiters in thermischer Wärmeflusskommunikation mit der in elektrischer Verbindung mit dem Stromableiter stehenden Elektrode der Einrichtung verbunden. Dadurch ist auch ein guter Wärmefluss bzw. ein geringer Wärmeflusswiderstand für den Abtransport von Wärme aus dem Inneren der Einrichtung von der Elektrode über den Stromableiter und die Wärmeabfuhreinrichtung nach außen möglich. Das Gehäuse der Einrichtung kann eine zylindrische Form aufweisen, die von einer langgestreckten zylindrischen Form, wie etwa einer stabähnlichen Form, bis hin zur Form einer Scheibe, wie insbesondere einer dünnen Scheibe, reicht. Dadurch kann die Einrichtung einerseits die Form herkömmlicher zylinderförmiger wiederaufladbarer Akkumulatoren als auch die Scheibenform von sogenannten Knopfzellen aufweisen.

Alternativ kann das Gehäuse auch eine quaderförmige Form aufweisen, insbesondere einen Quader mit einer niedrigen Bauhöhe. Die Einrichtung weist dann eine plattenähnliche Form auf. Vorzugsweise weist bei einer erfindungsgemäßen Einrichtung das Gehäuse eine im Wesentlichen quaderförmige Form auf und der aus dem Gehäuse herausragende Teil des ersten Stromableiters erstreckt sich entlang einer längsten Kante oder einer zweitlängsten Kante des Gehäuses. Die Ausführungsformen mit einem zylindrischen oder quaderförmigen Gehäuses mit niedriger bis sehr niedriger Bauhöhe ermöglicht einen kompakten Einbau der nach galvanischem Prinzip arbeitenden Einrichtung in einer mit Elektrizität zu versorgenden Vorrichtung, insbesondere beispielsweise in der Nähe bzw. parallel zu einer äußeren Gehäusewand der mit Elektrizität zu versorgenden Vorrichtung.

Vorzugsweise weist das Gehäuse eine im Wesentlichen quaderförmige Form auf und der aus dem Gehäuse herausragende Teil des ersten Stromableiters erstreckt sich parallel zu einer längsten Kante des Gehäuses auf einer von der längsten Kante und einer kürzesten Kante des Gehäuses begrenzten, ersten Gehäusefläche, und ein aus dem Gehäuse herausragender Teil des zweiten Stromableiters erstreckt sich auf einer der ersten Gehäusefläche gegenüberliegenden zweiten Gehäusefläche. Vorzugsweise weist bei einer erfindungsgemäßen Einrichtung das Gehäuse eine im Wesentlichen quaderförmige Form auf und der aus dem Gehäuse herausragende Teil des ersten Stromableiters erstreckt sich parallel zu einer längsten Kante des Gehäuses auf einer von der längsten Kante und einer kürzesten Kante des Gehäuses begrenzten ersten Gehäusefläche, und ein aus dem Gehäuse herausragender Teil eines zweiten Stromableiters erstreckt sich auf einer zweiten Gehäusefläche, die der ersten Gehäusefläche gegenüberliegt. So wird einerseits die längste mögliche Fläche bzw. Wärmeflussdurchlassfläche zwischen dem Stromableiter und einer auf diesem anzubringenden Wärmeabfuhrvorrichtung und andererseits auch eine größtmögliche Kontaktfläche für die Wärmeflusskommunikation zwischen dem Stromableiter und der im Inneren des Gehäuses angeordneten, damit elektrisch verbundenen Elektrode der Einrichtung ermöglicht für eine optimale Wärmeübertragung aus dem Inneren des Gehäuses zu der Wärmeabfuhreinrichtung.

Der erste Stromableiter kann mit einer Kathode der Einrichtung verbunden sein und der zweite Stromableiter kann mit einer Anode der Einrichtung verbunden sein. Vorzugsweise ist bei einer erfindungsgemäßen Einrichtung der erste Stromableiter mit einer Kathode der Einrichtung verbunden und der zweite Stromableiter ist mit einer Anode der Einrichtung verbunden. So erfüllt der Stromableiter zusätzlich zur Leitung der Elektrizität auch eine Aufgabe der Ableitung von Wärme aus dem Inneren des Gehäuses. Der erste Stromableiter kann einen Minuspol der Einrichtung und der zweite Stromableiter einen Pluspol der Einrichtung bilden. Vorzugsweise bildet bei einer erfindungsgemäßen Einrichtung der erste Stromableiter einen Minuspol der Einrichtung und der zweite Stromableiter einen Pluspol der Einrichtung.

Das Gehäuse kann eine im Wesentlichen quaderförmige Form aufweisen mit zwei einander gegenüberliegenden größten Gehäuseflächen, die dann als obere und untere Gehäusefläche bezeichnet werden, und zwei einander gegenüberliegenden zweitgrößten Gehäuseflächen, die dann als erste und zweite Seitenflächen bezeichnet werden und die mit der oberen und der unteren Gehäusefläche jeweils eine aus der Gruppe der längsten Kanten des Gehäuses teilen. Vorzugsweise ist dabei der Abstand zwischen der oberen und der unteren Gehäusefläche nicht größer als 30 %, weiter bevorzugt nicht größer als 20 % und noch weiter bevorzugt nicht größer als 10 % der Länge von einer der längsten Kanten. Vorzugsweise weist bei einer erfindungsgemäßen Einrichtung das Gehäuse eine im Wesentlichen quaderförmige Form mit zwei einander gegenüberliegenden größten Gehäuseflächen auf, die als obere und untere Gehäuseflächen bezeichnet werden, und zwei einander gegenüberliegenden zweitgrößten Gehäuseflächen, die als erste und zweite Seitenflächen bezeichnet werden und die mit der oberen und der unteren Gehäusefläche jeweils eine aus der Gruppe der längsten Kanten des Gehäuses teilen, wobei der Abstand zwischen der oberen und der unteren Gehäusefläche nicht größer als 30%, insbesondere nicht größer als 20%, und noch insbesondere nicht größer als 10% der Länge von einer aus der Gruppe der längsten Kanten ist. Auf diese Weise erhält die Einrichtung eine flache Bauform, was einen kompakten Einbau in einer mit Strom zu versorgenden Vorrichtung, beispielsweise parallel zu einer Gehäusewand der Vorrichtung, ermöglicht. Ferner bietet eine derartige flache, quaderförmige Bauweise der Einrichtung eine gute Stapelbarkeit für mehrere nebeneinander, voreinander und/oder übereinander angeordnete Einrichtungen.

Vorzugsweise ragt in dieser Bauform der erste Stromableiter aus einer der beiden Seitenflächen des Gehäuses heraus und der zweite Stromableiter ragt aus der der ersten Seitenfläche gegenüberliegenden anderen der beiden Seitenflächen des Gehäuses heraus und erstreckt sich parallel zu einer der längsten Kanten des Gehäuses. So wird eine optimale Wärme- und Stromübertragung von den Elektroden über den ersten bzw. zweiten Stromableiter zu den mit den Stromableitern in Wärmeflusskommunikation verbundenen Wärmeübertragungseinrichtungen erzielt.

Alternativ dazu kann das Gehäuse ferner zwei einander gegenüberliegende kleinste Gehäuseflächen aufweisen, die dann als erste und zweite Endflächen bezeichnet werden, und der erste Stromleiter kann aus der einen der beiden Endflächen und der zweite Stromableiter aus der anderen der beiden Endflächen herausragen. Vorzugsweise weist bei einer erfindungsgemäßen Einrichtung das Gehäuse ferner zwei einander gegenüberliegende kleinste Gehäuseflächen auf, die als erste und zweite Endflächen bezeichnet werden, und der erste Stromableiter ragt aus der einen der beiden Endflächen und der zweite Stromableiter ragt aus der anderen der beiden Endflächen heraus. Ein derartiger Aufbau der Einrichtung ermöglicht eine kompakte Stapelbarkeit von Einrichtungen übereinander und nebeneinander, wobei der elektrische Anschluss der Stromableiter und ein Zugang zu den Wärmeabfuhreinrichtungen, die in Wärmeflusskommunikation mit den Stromableitern sind, an den Endflächen der Einrichtung erfolgen kann.

Vorzugsweise weist die erste Wärmeabfuhreinrichtung eine langgestreckte Form mit einer Längsrichtung auf, wobei sie den ersten Stromableiter im Wesentlichen vollständig überdeckt und in der Längsrichtung zumindest in einer Richtung über die Ausdehnung des Stromableiters in seiner Längsrichtung hinausragt. So wird eine gute Wärmeübertragung bzw. Wärmeflusskommunikation über eine große Durchgangsfläche ermöglicht.

Vorzugsweise ist eine erfindungsgemäße Einrichtung so ausgebildet, dass die erste Wärmeabfuhreinrichtung sich in ihrer Längsrichtung über die Ausdehnung der Gehäusefläche, aus der der erste Stromableiter heraus ragt, hinaus erstreckt. Mindestens zwei oder mehr derartiger Einrichtungen können zum Vergrößern einer Gesamtkapazität elektrisch zusammengeschaltet und mechanisch kompakt in der Nähe zueinander angeordnet werden. Vorzugsweise ist eine erfindungsgemäße Einrichtung so ausgebildet, dass sie mit zumindest einer zweiten, im Wesentlichen baugleichen Einrichtung zu einem Zweifach-Modul gekoppelt werden kann. Dabei können die Einrichtung und zumindest die zweite Einrichtung in einer gemeinsam Ebene so angeordnet werden, dass der zweite Stromableiter der Einrichtung mit dem ersten Stromableiter der zweiten Einrichtung flächig in elektrischem Kontakt angeordnet und verbunden werden kann.

Vorzugsweise weist eine erfindungsgemäße Einrichtung eine Aufnahmeeinrichtung für thermische Energie auf, die in Wärmeflusskommunikation mit einer oder mehreren Wärmeabfuhreinrichtungen zum Aufnehmen der von der einen oder den mehreren Wärmeabfuhreinrichtungen abgeführten thermischen Energie gekoppelt ist.

In einem weiteren Aspekt der Erfindung wird ein Basisflachmodul einer nach galvanischen Prinzipien arbeitenden Vorrichtung bereitgestellt. Das Basisflachmodell umfasst eine erste nach galvanischen Prinzipien arbeitende Einrichtung mit einem ersten Gehäuse mit einer im Wesentlichen quaderförmigen Form, einem ersten Stromableiter, der aus einer ersten Seitenfläche oder ersten Endfläche herausragt, und einen zweiten Stromableiter, der aus einer der ersten gegenüberliegenden zweiten Seitenfläche oder zweiten Endfläche des Gehäuses herausragt, so wie eine zweite nach galvanischen Prinzipien arbeitende Einrichtung mit einem zweiten Gehäuse mit einer im Wesentlichen quaderförmigen Form, einem ersten Stromableiter, der aus einer ersten Seitenfläche oder ersten Endfläche des Gehäuses herausragt, und einem zweiten Stromableiter, der aus einer der ersten gegenüberliegenden zweiten Seitenfläche oder Endfläche des Gehäuses herausragt. Die erste und zweite Einrichtung sind so angeordnet, dass das Gehäuse der ersten Einrichtung in einer gemeinsamen Ebene mit dem Gehäuse der zweiten Einrichtung so angeordnet ist, dass die Gehäusefläche der ersten Einrichtung, aus der der zweite Stromableiter der ersten Einrichtung herausragt, der Gehäusefläche der zweiten Einrichtung, aus der der erste Stromableiter der zweiten Einrichtung herausragt, zugewandt ist. So kann der zweite Stromableiter der ersten Einrichtung mit dem ersten Stromableiter der zweiten Einrichtung auf kurzem Weg, vorzugsweise in elektrischem Kontakt, miteinander verbunden werden. Erfindungsgemäß umfasst das Basisflachmodul auch eine Wärmeabfuhreinrichtung, die in Wärmeflusskommunikation mit dem zweiten Stromableiter der ersten Einrichtung oder mit dem ersten Stromableiter der zweiten Einrichtung zum Ableiten von thermischer Energie verbunden ist. Der Zusammenbau als Basisflachmodul der ersten und zweiten Einrichtung stellt eine Kapazitätsverdopplung bereit. Durch die Einrichtung der beiden Gehäuse in einer gemeinsamen Ebene wird eine flache Bauweise des Basisflachmoduls und damit ein kompakter Einbau in eine durch das Basisflachmodul mit Elektrizität zu versorgenden Vorrichtung sowie eine gute Stapelbarkeit von zwei oder mehreren Basisflachmodulen zu einem Stapel von zwei oder mehr Basisflachmodulen ermöglicht.

Vorzugsweise ist die zweite Einrichtung im Wesentlichen baugleich zur ersten Einrichtung. Ein derartiger modularer Zusammenbau ermöglicht Erweiterungen zu Vorrichtungen mit größerer Kapazität, was auch durch die flache Bauweise und die Stapelbarkeit des Basisflachmoduls unterstützt wird.

Vorzugsweise sind der zweite Stromableiter der ersten Einrichtung und der erste Stromableiter der zweiten Einrichtung flächig, vorzugsweise formschlüssig und/oder kraftschlüssig, insbesondere in elektrischem Kontakt miteinander verbunden. Eine derartige elektrische Verbindung ermöglicht einen geringen Kontaktwiderstand beim Übergang von einem zum anderen Stromableiter in beispielsweise einer Serienschaltung der ersten und zweiten Einrichtung.

Vorzugsweise ist die Wärmeabfuhreinrichtung formflüssig und/oder kraftschlüssig mit dem zweiten Stromableiter der ersten Einrichtung und/oder mit dem ersten Stromableiter der zweiten Einrichtung verbunden. So werden geringe Wärmetransportverluste bzw. eine gute Wärmeflussleitfähigkeit von dem einen oder den beiden Stromableitern zu der Wärmeabfuhreinrichtung erzielt.

Der erste Stromableiter der ersten Einrichtung kann mit einer Kathode der ersten Einrichtung verbunden sein und der zweite Stromableiter der zweiten Einrichtung kann mit einer Anode der zweiten Einrichtung verbunden sein. So wird eine Serienschaltung der ersten und der zweiten Einrichtung erzielt. Der erste Stromableiter der ersten Einrichtung kann einen Minuspol des Basisflachmoduls bilden und der zweite Stromableiter der zweiten Einrichtung kann einen Pluspol des Basisflachmoduls bilden.

Vorzugsweise bildet bei einem erfindungsgemäßen Basisflachmodul der erste Stromableiter der ersten Einrichtung einen Minuspol des Basisflachmoduls und der zweite Stromableiter der zweiten Einrichtung einen Pluspol des Basisflachmoduls.

Nach einem weiteren Aspekt der vorliegenden Erfindung wird eine Vorrichtung, die nach galvanischen Prinzipien arbeitet, bereitgestellt. Die Vorrichtung umfasst ein erstes Basisflachmodul wie oben beschrieben und ein zweites Basisflachmodul ebenfalls wie oben beschrieben. Das zweite Basisflachmodul ist über dem ersten Basisflachmodul angeordnet, wobei der erste Stromableiter der ersten Einrichtung des zweiten Basisflachmoduls über dem ersten Stromableiter der ersten Einrichtung des ersten Basisflachmoduls angeordnet und der zweite Stromableiter der zweiten Einrichtung des zweiten Basisflachmoduls über dem zweiten Stromableiter der zweiten Einrichtung des ersten Basisflachmoduls angeordnet ist. Eine derartige Vorrichtung ermöglicht eine weitere Kapazitätsverdoppelung und ermöglicht eine elektrische Parallelschaltung des ersten und zweiten Basisflachmoduls mit kurzen elektrischen Verbindungswegen zwischen den entsprechenden Stromableitern und damit einem geringen elektrischen Leitungswiderstand in der elektrischen Zusammenschaltung.

Diese Vorrichtung kann so ausgebildet sein, dass durch Herstellen einer elektrischen Verbindung mittels einer geeigneten elektrischen Verbindungseinrichtung zwischen dem ersten Stromableiter der ersten Einrichtung des zweiten Basisflachmoduls und dem ersten Stromableiter der ersten Einrichtung des ersten Basisflachmoduls sowie einer elektrischen Verbindung mittels einer geeigneten elektrischen Verbindungseinrichtung zwischen dem zweiten Stromableiter der zweiten Einrichtung des Basisflachmoduls und dem zweiten Stromableiter der zweiten Einrichtung des ersten Basisflachmoduls eine Parallelschaltung der Basisflachmodule gebildet werden kann.

Der zweite Stromableiter der zweiten Einrichtung des zweiten Basisflachmoduls kann mit dem zweiten Stromableiter der zweiten Einrichtung des ersten Basisflachmoduls mittels einer elektrischen Verbindungseinrichtung verbunden sein. Dadurch wird eine Parallelschaltung des ersten und zweiten Basisflachmoduls erzielt.

Die Vorrichtung kann mindestens ein weiteres Basisflachmodul oder eine Vielzahl weiterer Basisflachmodule wie oben beschrieben umfassen, wobei die Basisflachmodule so übereinander angeordnet sind, dass für jeweils benachbarte Basisflachmodule der erste Stromableiter der ersten Einrichtung des oberen Basisflachmoduls über dem ersten Stromableiter der ersten Einrichtung des benachbart darunter angeordneten Basisflachmoduls und der zweite Stromableiter der zweiten Einrichtung des oberen Basisflachmoduls über dem zweiten Stromableiter der zweiten Einrichtung des benachbart darunter angeordneten Basisflachmoduls angeordnet ist. Auf diese Weise wird eine nahezu beliebig erweiterbare Stapelbarkeit mit einer Parallelschaltung von Basisflachmodulen und eine entsprechende Erhöhung der Gesamtkapazität der Vorrichtung erzielt.

Vorzugsweise ist der erste Stromableiter der ersten Einrichtung eines jeweiligen Basisflachmoduls mit dem ersten Stromableiter der ersten Einrichtung eines jeweils benachbarten Basisflachmoduls mittels einer elektrischen Verbindungseinrichtung verbunden. Ebenso ist vorzugsweise der zweite Stromableiter der zweiten Einrichtung eines jeweiligen Basisflachmoduls mit dem zweiten Stromableiter der zweiten Einrichtung eines jeweils benachbarten Basisflachmoduls mittels einer elektrischen Verbindungseinrichtung verbunden. Auf diese Weise wird eine Parallelschaltung der Basisflachmodule gebildet und elektrische Verbindungen mit kurzen Verbindungsstrecken ermöglicht.

Nach einem noch weiteren Aspekt der vorliegenden Erfindung wird eine Vorrichtung bereitgestellt, die nach galvanischen Prinzipien arbeitet und folgendes umfasst: ein erstes Basisflachmodul wie oben beschrieben und ein zweites Basisflachmodul wie ebenfalls oben beschrieben. Das zweite Basisflachmodul ist über dem ersten Basisflachmodul angeordnet, wobei der erste Stromableiter der ersten Einrichtung des zweiten Basisflachmoduls über dem zweiten Stromableiter der zweiten Einrichtung des ersten Basisflachmoduls und der zweite Stromableiter der zweiten Einrichtung des zweiten Basisflachmoduls über dem ersten Stromableiter der ersten Einrichtung des ersten Basisflachmoduls angeordnet ist. Auf diese Weise wird die Möglichkeit einer Serienschaltung der beiden Basisflachmodule bei kurzen elektrischen Verbindungsstrecken und mithin einem geringen elektrischen Leitungswiderstand in der elektrischen Zusammenschaltung ermöglicht.

Vorzugsweise ist die Vorrichtung ist so ausgebildet, dass durch Herstellen einer elektrischen Verbindung mittels einer geeigneten elektrischen Verbindungseinrichtung zwischen dem zweiten Stromableiter der zweiten Einrichtung des ersten Basisflachmoduls und dem ersten Stromableiter der ersten Einrichtung des zweiten Basisflachmoduls eine Serienschaltung der Basisflachmodule gebildet werden kann. Vorzugsweise kann bei einer erfindungsgemäßen Vorrichtung eine elektrische Verbindung mittels einer geeigneten elektrischen Verbindungseinrichtung zwischen dem zweiten Stromableiter der zweiten Einrichtung des zweiten Basisflachmoduls und dem ersten Stromableiter der ersten Einrichtung des ersten Basisflachmoduls eine Serienschaltung der Basisflachmodule gebildet werden.

Vorzugsweise ist der zweite Stromableiter der zweiten Einrichtung des ersten Basisflachmoduls mit dem ersten Stromableiter der ersten Einrichtung des zweiten Basisflachmoduls mittels einer elektrisch leitfähigen, insbesondere einer elektrischen Verbindungseinrichtung verbunden. Dadurch wird eine Serienschaltung der Basisflachmodule gebildet.

Die Vorrichtung kann mindestens ein weiteres Basisflachmodul oder eine Vielzahl weiterer Basisflachmodule wie oben beschrieben umfassen. Dabei werden die Basisflachmodule so übereinander angeordnet, dass für ein jeweiliges Basisflachmodul der erste Stromableiter der ersten Einrichtung des jeweiligen Basisflachmoduls unter dem zweiten Stromableiter der zweiten Einrichtung des benachbart darüber angeordneten Basisflachmoduls angeordnet ist und der zweite Stromableiter der zweiten Einrichtung des jeweiligen Basisflachmoduls unter dem ersten Stromableiter der ersten Einrichtung des benachbart darüber angeordneten Basisflachmoduls angeordnet ist. Vorzugsweise weist eine erfindungsgemäße Vorrichtung mindestens ein weiteres Basisflachmodul oder eine Vielzahl weiterer Basisflachmodule wie zuvor beschrieben auf. Dabei sind die Basisflachmodule der Vorrichtung so übereinander angeordnet, dass für ein jeweiliges Basisflachmodul der erste Stromableiter der ersten Einrichtung des jeweiligen Basisflachmoduls über dem zweiten Stromableiter der zweiten Einrichtung des benachbart darunter angeordneten Basisflachmoduls und der zweite Stromableiter der zweiten Einrichtung des jeweiligen Basisflachmoduls unter dem ersten Stromableiter der ersten Einrichtung des benachbart darüber angeordneten Basisflachmoduls angeordnet ist.

Vorzugsweise ist der erste Stromableiter der ersten Einrichtung eines jeweiligen mittleren Basisflachmoduls mit dem zweiten Stromableiter der zweiten Einrichtung eines benachbarten darunter angeordneten Basisflachmoduls mittels einer elektrischen Verbindungseinrichtung verbunden und der zweite Stromableiter der zweiten Einrichtung eines jeweiligen, insbesondere mittleren Basisflachmoduls ist mit dem ersten Stromableiter der ersten Einrichtung eines benachbart darüber angeordneten Basisflachmoduls mittels einer elektrischen Verbindungseinrichtung verbunden. So wird eine Serienschaltung der Basisflachmodule gebildet.

Eine erfindungsgemäße Vorrichtung nach dem vorhergehend genannten Aspekt der Erfindung zur Serienschaltung von Basisflachmodulen und eine erfindungsgemäße Vorrichtung nach dem davor genannten Aspekt der Erfindung zur Parallelschaltung von Basisflachmodulen können so ausgeführt werden, dass jeweils benachbarte Basisflachmodule aufeinander gestapelt sind, insbesondere mit einer dazwischengelegten, vorzugsweise dünnen, vorzugsweise elektrisch isolierenden und noch weiter bevorzugt schwingungsdämpfenden, flexiblen Folie und/oder Schicht, oder auch in direktem Gehäusekontakt von über- und und nebeneinander angeordneten Gehäusen. So wird ein mechanisch kompakter Zusammenbau der Basisflachmodule erzielt.

Vorzugsweise werden bzw. sind die jeweils übereinander angeordneten Stromableiter mittels mindestens einer starren elektrischen Verbindungseinrichtung miteinander elektrisch leitfähig verbunden. Alternativ werden bzw. sind die jeweils übereinander angeordneten Stromableiter mittels mindestens einer flexiblen elektrischen Verbindungseinrichtung miteinander elektrisch leitfähig verbunden.

Vorzugsweise ist in einer Vorrichtung mit dem beschriebenen mechanischen Zusammenbau in jedem durch eine elektrische Verbindungseinrichtung verbundenen Paar von benachbarten Stromableitern an mindestens einem Stromableiter und/oder an beiden Stromableitern eine Wärmeabfuhreinrichtung in Wärmeflusskommunikation mit den jeweiligen Stromableitern verbunden. Weiter bevorzugt ist mit bzw. an jedem Stromableiter eine Wärmeabfuhreinrichtung in Wärmeflusskommunikation mit dem Stromableiter verbunden. Auf diese Weise kann die Wärme noch effektiver aus dem Inneren der miteinander verbundenen Einrichtungen von jeweils benachbarten, übereinander gestapelten Basisflachmodule abgeleitet werden.

Vorzugsweise weist eine jeweilige Wärmeabfuhreinrichtung eine langgestreckte Form mit einer Längsrichtung auf, die den jeweiligen Stromableiter im Wesentlichen vollständig überdeckt und in der Längsrichtung zumindest in einer Richtung über die entsprechende Ausdehnung des Stromableiters insbesondere in dessen Längsrichtung hinausragt. Vorzugsweise erstreckt sich die Wärmeabfuhreinrichtung in ihrer Längsrichtung über die Ausdehnung der Gehäusefläche, aus der der jeweilige Stromableiter herausragt, hinaus. Auf diese Weise sind selbst bei einem übereinander und nebeneinander gestapelten mechanischen Zusammenbau bzw. Stapelung der Basisflachmodule die herausragenden Enden der Wärmeabfuhreinrichtungen leicht zugänglich bzw. verbindbar mit einer Aufnahmeeinrichtung für thermische Energie, wie weiter unten beschrieben.

Die Vorrichtungen nach den vorgenannten Aspekten der Erfindung können zwei oder mehrere Stapel von übereinander angeordneten Basisflachmodulen aufweisen. Vorzugsweise weist eine erfindungsgemäße Vorrichtung zwei oder mehrere Stapel von übereinander angeordneten Basisflachmodulen auf.

Nach einem noch weiteren Aspekt der vorliegenden Erfindung wird eine noch andere nach galvanischen Prinzipien arbeitende Vorrichtung bereitgestellt. Diese Vorrichtung umfasst eine erste Einrichtung wie oben beschrieben und eine zweite Einrichtung wie ebenfalls oben beschrieben. Die zweite Einrichtung ist über der ersten Einrichtung angeordnet, wobei der erste Stromableiter der zweiten Einrichtung über dem ersten Stromableiter der ersten Einrichtung und der zweite Stromableiter der zweiten Einrichtung über dem zweiten Stromableiter der ersten Einrichtung angeordnet ist. Auf diese Weise können die erste und zweite Einrichtung leicht elektrisch parallel verschaltet und mechanisch kompakt übereinander angeordnet werden.

Vorzugsweise ist die Vorrichtung so ausgebildet, dass durch Herstellen einer ersten elektrischen Verbindung mittels einer geeigneten, ersten elektrischen Verbindungseinrichtung zwischen dem ersten Stromableiter der zweiten Einrichtung und dem ersten Stromableiter der ersten Einrichtung sowie einer zweiten elektrischen Verbindung mittels einer geeigneten, zweiten elektrischen Verbindungseinrichtung zwischen dem zweiten Stromableiter der zweiten Einrichtung und dem zweiten Stromableiter der ersten Einrichtung eine Parallelschaltung der Einrichtungen gebildet werden.

Die Vorrichtung kann mindestens eine weitere Einrichtung oder eine Vielzahl weiterer Einrichtungen wie oben beschrieben umfassen, wobei die Einrichtungen so übereinander angeordnet sind, dass die jeweiligen ersten Stromableiter der Einrichtungen und die jeweiligen zweiten Stromableiter der Einrichtungen jeweils übereinander angeordnet sind. Vorzugsweise umfasst eine erfindungsgemäße Vorrichtung mindestens eine weitere Einrichtung oder eine Vielzahl weiterer Einrichtungen, wie oben beschrieben. Dabei sind die Einrichtungen so übereinander angeordnet, dass die jeweiligen ersten Stromableiter der Einrichtungen und die jeweiligen zweiten Stromableiter der Einrichtungen jeweils übereinander angeordnet sind.

Vorzugsweise sind Paare der ersten Stromableiter der jeweiligen Einrichtungen mittels jeweils einer elektrischen Verbindungseinrichtung miteinander elektrisch leitfähig verbunden und die zweiten Stromableiter der Einrichtungen sind jeweils mittels einer elektrischen Verbindungseinrichtung miteinander elektrisch leitfähig verbunden. Dadurch wird eine Parallelschaltung der Einrichtungen gebildet. Vorzugsweise sind bei einer erfindungsgemäßen Vorrichtung die ersten Stromableiter der jeweiligen Einrichtungen miteinander mittels einer elektrischen Verbindungseinrichtung verbunden und die zweiten Stromableiter der jeweiligen Einrichtungen sind miteinander mittels einer elektrischen Verbindungseinrichtung verbunden. Dabei wird eine Parallelschaltung der Einrichtungen gebildet. Vorzugsweise weist eine erfindungsgemäße Vorrichtung zwei oder mehrere Stapel von übereinander angeordneten Einrichtungen auf.

Vorzugsweise weist eine erfindungsgemäße Vorrichtung zwei oder mehrere Stapel von übereinander angeordneten Einrichtungen auf.

Nach einem noch weiteren Aspekt der Erfindung wird eine Vorrichtung bereitgestellt, die nach galvanischen Prinzipien arbeitet und die folgendes umfasst: eine erste Einrichtung wie oben beschrieben und eine zweite Einrichtung wie oben beschrieben, wobei die zweite Einrichtung über der ersten Einrichtung angeordnet ist und wobei der erste Stromableiter der zweiten Einrichtung über dem zweiten Stromableiter der ersten Einrichtung und der zweite Stromableiter der zweiten Einrichtung über dem ersten Stromableiter der ersten Einrichtung angeordnet ist.

Die Vorrichtung kann so ausgebildet sein, dass durch Herstellen einer elektrischen Verbindung mittels einer geeigneten elektrischen Verbindungseinrichtung zwischen dem ersten Stromableiter der zweiten Einrichtung und dem zweiten Stromableiter der ersten Einrichtung eine Serienschaltung der Einrichtungen gebildet werden kann. Vorzugsweise ist eine erfindungsgemäße Vorrichtung so ausgebildet, dass durch Herstellen einer elektrischen Verbindung mittels einer geeigneten elektrischen Verbindungseinrichtung zwischen dem ersten Stromableiter der zweiten Einrichtung und dem zweiten Stromableiter der ersten Einrichtung eine Serienschaltung der Einrichtungen gebildet werden kann.

Die Vorrichtung kann mindestens eine weitere Einrichtung oder eine Vielzahl weiterer Einrichtungen wie oben beschrieben umfassen, wobei die Einrichtungen so übereinander angeordnet sind, dass der erste Stromableiter einer über einer jeweiligen Einrichtung angeordneten benachbarten Einrichtung über einem jeweiligen zweiten Stromableiter der jeweiligen Einrichtung angeordnet ist. Vorzugsweise umfasst eine erfindungsgemäße Vorrichtung mindestens eine weitere Einrichtung oder eine Vielzahl weiterer Einrichtungen wie oben beschrieben, wobei die Einrichtungen so übereinander angeordnet sind, dass der erste Stromableiter einer über einer jeweiligen Einrichtung angeordneten benachbarten Einrichtung über einem jeweiligen zweiten Stromableiter der jeweiligen Einrichtung angeordnet ist.

Vorzugsweise ist in der Vorrichtung der erste Stromableiter einer über einer jeweiligen Einrichtung angeordneten benachbarten Einrichtung mittels einer elektrischen Verbindungseinrichtung mit einem jeweiligen zweiten Stromableiter der jeweiligen Einrichtung verbunden, so dass eine Serienschaltung der übereinander angeordneten Einrichtungen gebildet wird.

Die Vorrichtungen nach den vorgenannten beiden Aspekten kann zwei oder mehrere Stapel von übereinander angeordneten Einrichtungen aufweisen. Vorzugsweise weist eine erfindungsgemäße Vorrichtung zwei oder mehrere Stapel von übereinander angeordneten Einrichtungen auf.

In den oben offenbarten Vorrichtungen nach den verschiedenen Aspekten der Erfindung können die Stapel von Basisflachmodulen bzw. Einrichtungen nebeneinander in einer linearen, bi-linearen oder mehrfach-linearen Anordnung angeordnet sein. Vorzugsweise sind in einer erfindungsgemäße Vorrichtung die Stapel nebeneinander in einer linearen, bi-linearen oder mehrfach-linearen Anordnung angeordnet.

In diesen Vorrichtungen können mindestens zwei oder mehr lineare, bi-lineare oder mehrfach-lineare Anordnungen nebeneinander und/oder übereinander angeordnet sein. Vorzugsweise sind in einer erfindungsgemäße Vorrichtung mindestens zwei oder mehr lineare, bi-lineare oder mehrfach-lineare Anordnungen nebeneinander und/oder übereinander angeordnet.

Bei der Stapelung bzw. der Anordnung von Stapeln nebeneinander kann zwischen den jeweils über- bzw. nebeneinander angeordneten Einrichtungen eine oder mehrere, insbesondere dünne, vorzugsweise elektrisch isolierende, vorzugsweise schwingungsdämpfende, vorzugsweise flexible, Folie oder Schicht angeordnet sein. Vorzugsweise sind bei einer erfindungsgemäßen Vorrichtung bei der Stapelung bzw. der Anordnung von Stapeln nebeneinander zwischen den jeweils über- bzw. nebeneinander angeordneten Einrichtungen eine oder mehrere, insbesondere dünne, vorzugsweise elektrisch isolierende, vorzugsweise schwingungsdämpfende, vorzugsweise flexible, Folie oder Schicht angeordnet.

Die oben offenbarte Einrichtung, das oben offenbarte Basisflachmodul und die oben offenbarten Vorrichtungen nach den verschiedenen Aspekten der vorliegenden Erfindung können ferner eine Aufnahmeeinrichtung für thermische Energie umfassen. Die Aufnahmeeinrichtung ist in Wärmeflusskommunikation mit einer oder mehreren Wärmeabfuhreinrichtungen zum Aufnehmen der von der einen oder den mehreren Wärmeabfuhreinrichtungen abgeführten thermischen Energie gekoppelt. Vorzugsweise weist eine erfindungsgemäße Vorrichtung eine Aufnahmeeinrichtung für thermische Energie auf, die in Wärmeflusskommunikation mit einer oder mehreren Wärmeabfuhreinrichtungen zum Aufnehmen der von der einen oder den mehreren Wärmeabfuhreinrichtungen abgeführten thermischen Energie gekoppelt ist. Die Aufnahmeeinrichtung für thermische Energie kann bei geeigneter Ausführung die Wärmeabfuhr aus dem Inneren der Einrichtung bzw. der zusammengeschalteten Einrichtungen verbessern.

Die Abfuhreinrichtung kann geeignet temperiert sein und vorzugsweise gekühlt sein. Dadurch wird eine Wärmesenke gebildet, die den aus den Einrichtungen über die Stromableiter und die Wärmeabfuhreinrichtungen abgeleiteten Wärmefluss aufnimmt und damit einer Temperaturerhöhung im Betrieb der Einrichtungen noch besser entgegen wirkt.

Weitere vorteilhafte Ausführungsformen ergeben sich aus den beigefügten Zeichnungen. Darin zeigen:
Fig. 1A eine perspektivische schematische Ansicht einer mit Stromableitern und Wärmeabfuhreinrichtungen ausgestatten, im Wesentlichen zylinderförmigen Einrichtung nach der Erfindung und Fig. 1B eine Ansicht, in axialer Richtung gesehen, der Einrichtung aus der Fig. 1A.
Figuren 2A bis 2C perspektivische schematische Ansichten von drei verschiedenen Ausführungsformen von im Wesentlichen quaderförmigen Einrichtungen nach der Erfindung.
Fig. 3A eine perspektivische schematische Ansicht, Fig. 3B eine schematische Aufsicht von oben und Fig. 3C eine schematische Aufsicht von vorne eines Basisflachmoduls nach der Erfindung.
Fig. 4 eine schematische Aufsicht auf die Endflächen von zwei zu einer Serienschaltung verschalteten, erfindungsgemäßen Basisflachmodulen der Fig. 3.
Fig. 5 eine schematische Aufsicht auf die Endflächen, von zwei zu einer Parallelschaltung verschalteten, erfindungsgemäßen Basisflachmodulen der Fig. 3.
Fig. 6 eine schematische Aufsicht auf die Endflächen von zwei in einer Parallelschaltung verschalteten, erfindungsgemäßen Einrichtung aus der Fig. 2C.

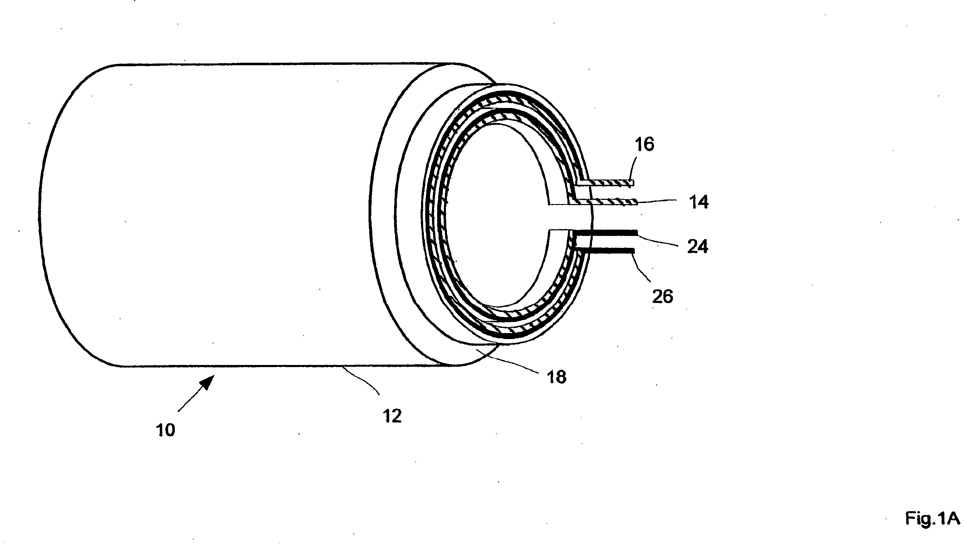

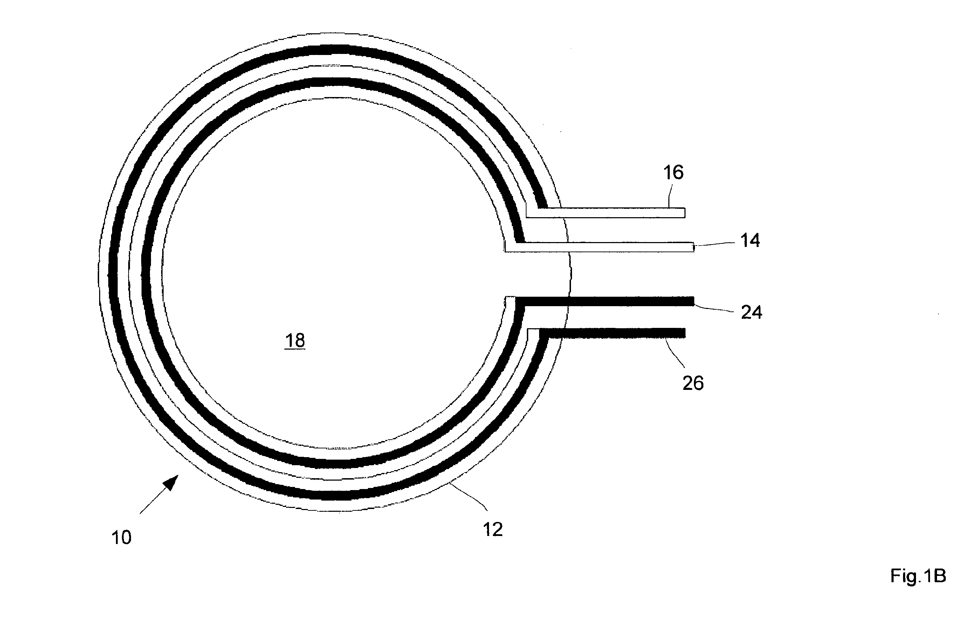

Fig. 1 zeigt als Beispiel für eine nach galvanischen Prinzipien arbeitende Einrichtung einen Akkumulator 10. Fig. 1A zeigt eine perspektivische schematische Ansicht des im Wesentlichen zylinderförmigen Akkumulators 10, und Fig. 1B zeigt eine Aufsicht gesehen in Richtung einer Längsachse auf eine Endfläche 18 des Akkumulators 10 aus der Fig. 1A. Wie in Fig. 1A gezeigt, umfasst die Einrichtung 10 ein im Wesentlichen zylinderförmiges Gehäuse 12 mit einer ersten Endfläche 18 und einer zweiten, der ersten Endfläche 18 in axialer Richtung des Gehäuses 12 gegenüberliegenden Seite angeordnete, nicht gezeigte zweite Endfläche. Die Einrichtung 10 umfasst ferner einen ersten Stromableiter 14, einen zweiten Stromableiter 16, eine erste Wärmeabfuhreinrichtung 24 und eine zweite Wärmeabfuhreinrichtung 26. Wie in den Figuren 1A und 1B gezeigt, ragen der erste Stromableiter 14 und der zweite Stromableiter 16 aus der ersten Endfläche 18 heraus. Ein Teil der Endfläche 18, der von dem herausragenden ersten Stromableiter 14 durchstoßen wird, weist die Form eines fast vollständig geschlossenen Kreisring mit einem kleineren Radius auf, und ein Teil der Endfläche 18, der von dem zweiten Stromableiter 16 durchstoßen wird, weist ebenfalls die Form eines fast vollständig geschlossenen Kreisrings mit einem größeren Radius als der zum ersten Stromableiter 14 gehörende innere, fast vollständig geschlossene Kreisring auf. Dort, wo der innere Kreisring unterbrochen ist, weist der erste Stromableiter einen im Wesentlichen radial nach außen führenden Ansatz auf, der als von außen zugänglicher erster Strom- bzw. Spannungsanschlusspol des Akkumulators 10 dient. Auf der Außenseite des zylinderförmigen Abschnitts des aus der Endfläche 18 herausragenden Teils des ersten Stromableiters 14 ist die erste Wärmeabfuhreinrichtung 24 form- und kraftschlüssig befestigt. Dort, wo der Kreisring nicht geschlossen ist, und an dem freien Ende, d.h. wo der radial nach außen stehende Abschnitt des ersten Stromableiters 14 nicht angebracht ist, weist die erste Wärmeabfuhreinrichtung 24 einen im Wesentlichen radial nach außen ragenden Abschnitt auf. Dieser Abschnitt dient zum Anschließen bzw. Verbinden der ersten Wärmeabfuhreinrichtung 24 von außen an eine bzw. mit einer nicht gezeigten Aufnahmeeinrichtung für thermische Energie. Durch die form- und kraftschlüssige Befestigung der ersten Wärmeabfuhreinrichtung 24 an bzw. mit dem ersten Stromableiter 14 wird eine flächige Wärmeflusskommunikation zwischen dem ersten Stromableiter 14 und der ersten Wärmeabfuhreinrichtung 24 erzielt.

Der zweite Stromableiter 16 und die zweite Wärmeabfuhreinrichtung 26 sind strukturell in vergleichbarer Weise ausgeführt wie der erste Stromableiter 14 und die erste Wärmeabfuhreinrichtung 24, nur dass die Durchmesser der zylinderförmigen Segmente des zweiten Stromableiters 16 und der zweiten Wärmeabfuhreinrichtung größer sind als die jeweiligen Durchmesser der zylindrischen Segmente des ersten Stromableiters 14 und der ersten Wärmeabfuhreinrichtung 24, wie in den Figuren 1A und 1B gezeigt.

Im Inneren des im Wesentlichen zylinderförmigen Gehäuses 12 sind eine im Wesentlichen zylinderförmige Kathode und eine im Wesentlichen zylinderförmige Anode ineinander geschachtelt so angeordnet, dass die Kathode elektrisch leitend mit dem zylinderförmigen, ins Innere des Gehäuses 12 ragenden Segment des ersten Stromableiters 14 elektrisch verbunden ist, und dass die Anode elektrisch leitend mit dem ins Innere des Gehäuses 12 ragenden, zylinderförmigen Abschnitts des zweiten Stromableiters 16 verbunden ist. So weisen die Verbindungen zwischen dem ersten bzw. zweiten Stromableiter 14, 16 und der Kathode (nicht gezeigt) bzw. der Anode (nicht gezeigt) jeweils eine im Wesentlichen ringförmige Querschnittsfläche auf, die eine nahezu maximale Querschnittsfläche für die Ableitung von Strom von der Kathode bzw. Anode zu den jeweiligen angeschlossenen Stromableitern bereitstellt.

In einer Variante der in den Figuren 1A und 1B gezeigten ersten Ausführungsform einer erfindungsgemäßen Einrichtung 10 sind der zweite Stromableiter 16 und die zweite Wärmeabfuhreinrichtung 26 auf der nicht gezeigten Endfläche des Gehäuses 12, die der in den Figuren 1A und 1B sichtbaren Endfläche 18 gegenüberliegt, angeordnet. In einer weiteren Variante sind zusätzlich zu dem auf der ersten Endfläche 18 angeordneten ersten Stromableiter 14 mit der ersten Wärmeabfuhreinrichtung 24 und dem zweiten Stromableiter 16 mit der zweiten Wärmeabfuhreinrichtung 26 auch auf der der Endfläche 18 gegenüberliegenden, in den Figuren 1A und 1B nicht gezeigten Endfläche entsprechende Stromableiter und Wärmeabfuhreinrichtungen angeordnet. Dabei sind die auf der nicht gezeigten Endfläche angeordneten Stromableiter und Wärmeabfuhreinrichtungen so ausgebildet, dass der erste Akkumulator 10 in Richtung seiner Zylinderachse mit einem im Wesentlichen baugleichen zweiten Akkumulator so zusammengebaut werden kann, dass jeweils elektrisch leitende Verbindungen zwischen dem ersten bzw. inneren Stromableiter bzw. dem zweiten bzw. äußeren Stromableiter auf der Endfläche des zweiten Akkumulators mit dem ersten Stromableiter 14 bzw. dem zweiten Stromableiter 16 auf der Endfläche 18 des ersten Akkumulators 10, so dass eine elektrische Parallelschaltung des ersten und zweiten Akkumulators erzielt wird. Auf diese Weise lassen sich nicht nur zwei, sondern auch drei oder beliebig viele weitere Akkumulatoren in ihrer Längsrichtung zusammenbauen.

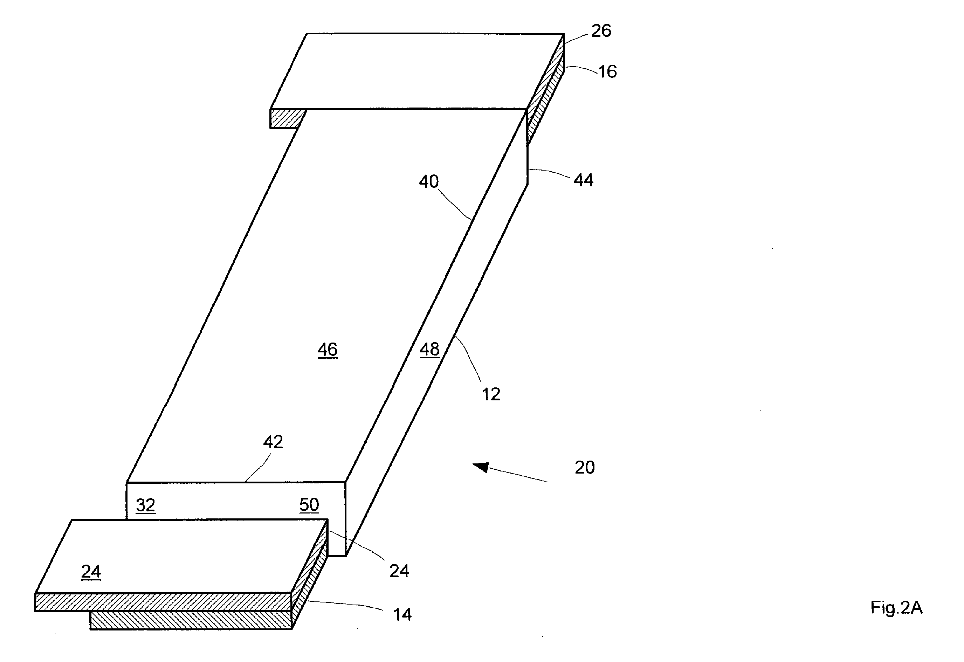

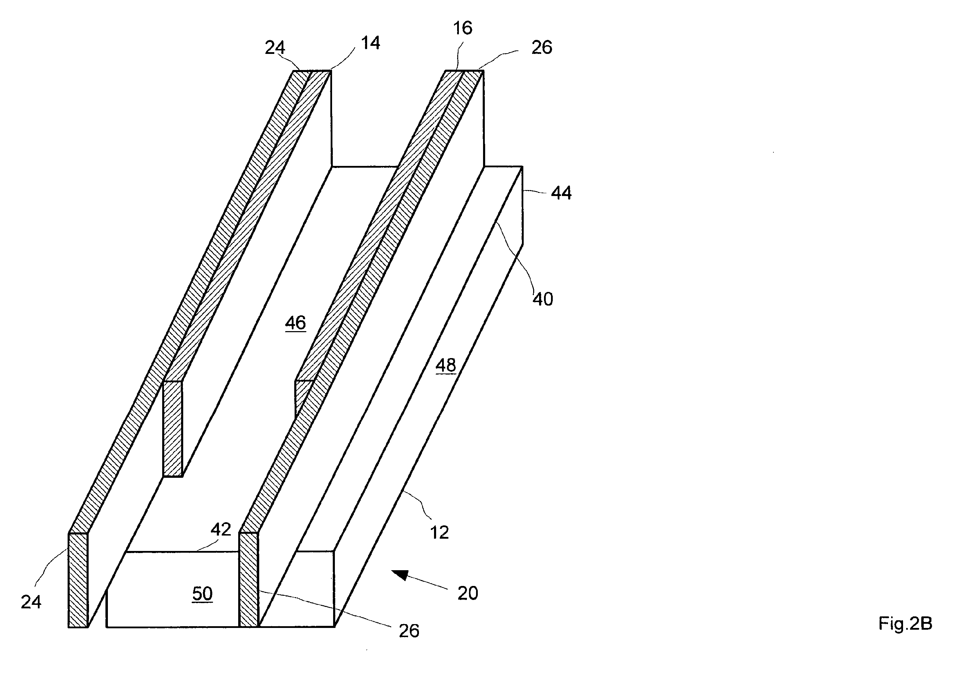

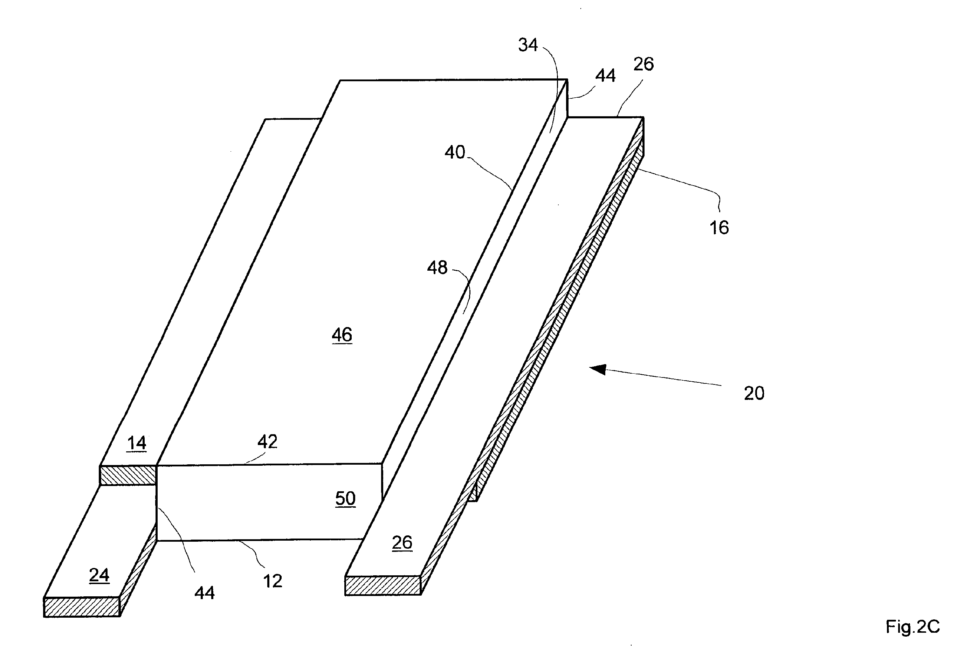

Fig. 2 zeigt verschiedene Varianten einer zweiten Ausführungsform eines erfindungsgemäßen Akkumulators 20 mit einem im Wesentlichen quaderförmigen Gehäuse 12. Das quaderförmige Gehäuse ist in einer flachen Bauform ausgeführt und umfasst folglich eine erste und eine der ersten gegenüberliegende, zweite größte Gehäusefläche 46, die von längsten Kanten 40 und zweitlängsten Kanten 42 begrenzt ist; eine erste und eine der ersten gegenüberliegende, zweite zweitgrößte Gehäusefläche 48, die von längsten Kanten 40 und kürzesten Kanten 44 begrenzt sind; und eine erste und eine zweite, der ersten gegenüberliegende, kleinste Gehäusefläche 50, die von zweitlängsten Kanten 42 und kürzesten Kanten 44 begrenzt sind. Die erste bzw. zweite größte Gehäusefläche 46 werden im folgenden auch obere bzw. untere Gehäusefläche genannt. Die erste bzw. zweite zweitgrößte Gehäusefläche 46 werden im folgenden auch erste bzw. linke und zweite bzw. rechte Seitenflächen genannt, wobei sich die Angaben "links" bzw. "rechts" auf die relative Anordnung in den Ansicht der Figuren 2A bis 2C beziehen. Die erste und zweite kleinste Gehäusefläche 50 werden im Folgenden auch vordere bzw. hintere Endfläche bezeichnet, wobei sich die Angaben "vorne" und "hinten" wiederum auf die Ansicht der Fig. 2 bezieht.

Fig. 2A zeigt eine schematische perspektivische Ansicht eines Akkumulators 20 mit quaderförmigem Gehäuse 12, aus der (in der Ansicht der Fig. 2A) vorderen Endfläche 50 ein erster Stromableiter 14 herausragt, und auf der gegenüberliegenden (in der Ansicht der Fig. 2A hinteren) Endfläche 44 ein zweiter Stromableiter 16 herausragt. Die aus dem Gehäuse herausragenden Teile der Stromableiter 14 bzw. 16 weisen eine ebene, parallel zu einer größten Gehäusefläche 46 ausgerichtete, rechteckige, langgestreckte Form auf und sind in ihrer Längsrichtung parallel zu einer bzw. den zweitlängsten Kanten 42 ausgerichtet. An dem ersten bzw. zweiten Stromableiter 14 bzw. 16 ist jeweils zur Herstellung von Wärmeflusskommunikation, insbesondere formschlüssig und kraftschlüssig, eine erste bzw. zweite Wärmeabfuhreinrichtung 24 bzw. 26 befestigt. Die Wärmeabfuhreinrichtungen 24 und 26 überdecken jeweils im Wesentlichen die gesamte ebene Seite bzw. Fläche des aus dem Gehäuse 12 herausragenden Abschnitts der Stromableiter 14 bzw. 16. Daher weisen die Wärmeabfuhrvorrichtungen 24, 26 ebenfalls eine langgestreckte Form auf. Sie ragen in ihrer Längsrichtung über die entsprechende Längenabmessung der ebenen Kontaktfläche des entsprechenden Stromableiters 14 bzw. 16 (in der Fig. 2A gezeigten Ansicht nach links) hinaus. Die Wärmeabfuhreinrichtungen 24 und 26 ragen auch über die durch die kürzeste Kante 44 gebildete Begrenzung der Gehäuseflächen 50, aus der die Stromableiter 14 und 16 hinausragen, in der in Fig. 2A gezeigten Ansicht nach links, hinaus.

In der Ausgestaltung der Fig. 2A lassen sich ein, zwei oder mehrere Akkumulatoren 20 mechanisch kompakt übereinander stapeln, vorzugsweise so, dass die Akkumulatoren 20 mit ihren größten Gehäuseflächen 46 ohne einen nennenswerten Zwischenraum aufeinander liegen und so einen Stapel mit einem, zwei oder mehreren Akkumulatoren 20 bilden. Die Wärmeabfuhreinrichtungen 24 und 26 ragen dann über die jeweiligen zweitgrößten Gehäuseflächen 48 der jeweiligen aufeinander gestapelten Akkumulatoren 20 hinaus und sind somit von außen leicht zugänglich und zu kontaktieren zum Anschließen in Wärmeflusskommunikation an eine Abfuhreinrichtung (nicht gezeigt) für thermische Energie. Zwei derartige Stapelanordnungen von Akkumulatoren 20 können auch direkt nebeneinander in einer "Rücken-an-Rücken"-Anordnung zusammengebaut werden, wobei die Wärmeabfuhreinrichtungen des zweiten Stapels auf einer Seite hinausragen, die der Seite des ersten Stapels, aus der die Wärmeabfuhreinrichtungen des ersten Stapels hinausragt, gegenüberliegt.

In einer Variante der in Fig. 2A gezeigten Ausbildung ragen die Wärmeabfuhreinrichtungen 24 und 26 nicht über die entsprechenden Stromableiter 14 und 16 in Richtung der zweitlängsten Kante 42 (in Fig. 2A nach links), sondern in Richtung einer längsten Kante 40 (in Fig. 2A nach rechts), und die zweite Wärmeabfuhreinrichtung 26 in einer entgegengesetzten Richtung (in der in Fig. 2A gezeigten Ansicht nach hinten) hinaus. Diese Variante hat den Vorteil, dass nicht nur zwei Stapel von Akkumulatoren 20 in einer "Rücken-an-Rücken"-Anordnung nebeneinander angeordnet werden können, sondern dass beliebig viele Stapel von Akkumulatoren unmittelbar nebeneinander angeordnet werden können, wobei für eine kompakte Anordnung nur ein minimaler oder kein Zwischenraum zwischen den zweitgrößten Gehäuseflächen 48 der Akkumulatoren 20 in den verschiedenen Stapeln frei ist.

Fig. 2B zeigt eine andere Ausführungsform der Anordnung der Stromableiter in dem Gehäuse 12. In dieser Anordnung ragen der erste Stromableiter 14 und der zweite Stromableiter 16 aus der gleichen größten Gehäusefläche 46 heraus, weisen eine langgestreckte Form auf und erstrecken sich in einer Richtung parallel zu einer längsten Kante 40 des quaderförmigen Gehäuses 20. Die erste bzw. zweite Wärmeabfuhreinrichtung 24 bzw. 26 ist formschlüssig und kraftschlüssig auf dem aus dem Gehäuse 12, genauer aus der größten Gehäusefläche 46, herausragenden Teil des ersten bzw. zweiten Stromableiters 14 bzw. 16 befestigt. Folglich sind die erste und die zweite Wärmeabfuhreinrichtung 24 und 26 ebenfalls langgestreckt und ragen in ihrer Längsrichtung nicht nur über die Begrenzung des ersten bzw. zweiten Stromableiters 14 bzw. 16, sondern über die die Gehäusefläche 46 begrenzende, zweitlängste Kante 42 des Gehäuses 12 hinaus.

Die in Fig. 2B gezeigte Variante der zweiten Ausführungsform eines Akkumulators weist folgende Vorteile auf. Es können jeweils zwei im Wesentlichen baugleiche Akkumulatoren so übereinander gestapelt werden, dass sich die größten Gehäuseflächen 46, aus denen die Stromableiter 14, 16 herausragen, gegenüberliegen, und bei geeigneter Ausbildung der Stromableiter die jeweiligen ersten Stromableiter 14 in elektrischem Kontakt miteinander und die zweiten Stromableiter 16 ebenfalls in elektrischem Kontakt miteinander kommen, so dass eine elektrische Parallelschaltung von zwei so übereinander angeordneten Akkumulatoren 20 entsteht. Durch die Erstreckungsrichtung der Stromableiter 14 und 16 parallel zu einer längsten Kante 40 des Gehäuses wird die Verbindung zwischen dem ins Gehäuseinnere hineinragenden Teil des ersten bzw. zweiten Stromableiters mit einer Elektrode (Kathode bzw. Anode) des Akkumulators so, dass eine besonders große Querschnittsfläche für die Leitung des elektrischen Stroms von den Elektroden in den Stromableiter und für den Wärmefluss aus den Elektroden in die Stromableiter 14 bzw. 16 bereitgestellt wird. Zusätzlich ragen die erste und zweite Wärmeabfuhreinrichtung 24 und 26, die ebenfalls eine langgestreckte Form aufweisen, in ihrer Längsrichtung nicht nur über die Begrenzung des jeweiligen ersten und zweiten Stromableiters 14 und 16 sondern auch über die Begrenzung durch die Kante 42 der Gehäusefläche 46, aus der die Stromableiter 14 und 16 herausragen, hinaus. Dadurch sind die hinausragenden Endabschnitte der Wärmeabfuhreinrichtungen 24 und 26 auch in der Konfiguration von einem, zwei oder mehreren paarweise gestapelten Akkumulatoren aus der von den kleinsten Gehäuseflächen 50 gebildeten Begrenzungsebene eines Stapels hinaus zugänglich für den Anschluss der Wärmeabfuhreinrichtungen 24 und 26 in Wärmeflusskommunikation mit einer Abfuhreinrichtung (nicht gezeigt) für thermische Energie, wie diese weiter unten erläutert wird.

Die in Fig. 2B gezeigte Ausführungsform kann dahingehend abgeändert werden, dass der zweite Stromableiter 16 und die zweite Wärmeabfuhreinrichtung 26 auf der (in Fig. 2B nicht gezeigten unteren) Gehäusefläche, die der Gehäusefläche 46, aus der der erste Stromableiter 14 herausragt, angeordnet sind, und dass auf der Gehäusefläche 46 anstelle des zweiten Stromableiters 16 eine Stromableitungskontaktfläche, die flächenbündig mit der Gehäusefläche 46, oder nur ein wenig hervorstehend oder vorzugsweise ein wenig zurückversetzt vorgesehen ist, und dass auf der der (in Fig. 2B gezeigten) Gehäusefläche 46 gegenüberliegenden Gehäusefläche spiegelsymmetrisch zum ersten Stromableiter 14 eine Stromableitungskontaktfläche, die flächenbündig oder leicht hervortretend oder vorzugsweise leicht zurückversetzt in Bezug auf die Gehäusefläche vorgesehen ist. In dieser Abänderung lassen sich zwei oder beliebig viele mehrere Akkumulatoren übereinander stapeln, Dabei entstehen zwischen den größten Gehäuseflächen der übereinandergestapelten Akkumulatoren jeweils Zwischenräume, die eine lichte Weite aufweisen, die der Herausraghöhe des ersten bzw. zweiten Stromableiters aus den größten Gehäuseflächen entspricht. Dabei tritt der erste Stromableiter eines jeweiligen Akkumulators beim Stapeln in elektrischen Kontakt mit der entsprechenden Stromableitungsfläche eines benachbart darüber angeordneten Akkumulators und der zweite Stromableiter eines jeweiligen Akkumulators tritt in elektrischen Kontakt mit der entsprechenden Stromableitungsfläche eines benachbart darunter im Stapel angeordneten Akkumulators. Dabei sind selbstverständlich die jeweils an dem äußeren Ende des Stapels angeordneten Akkumulatoren ausgenommen. Für an den Stapelenden angeordneten Akkumulatoren sind die entsprechenden Stromableiter von außen her zum Kontaktieren zugänglich.

Fig. 2C zeigt eine derzeit bevorzugte Ausführungsform eines erfindungsgemäßen Akkumulators 20 mit einem im Wesentlichen quaderförmigen Gehäuse 12 in flacher Bauweise. Der erste Stromableiter 14 ist auf einer zweitgrößten Gehäusefläche 48 des Gehäuses 12 und der zweite Stromableiter 16 ist auf der gegenüberliegenden zweitgrößten Gehäusefläche 48, der in Fig. 2C gezeigten rechten Seitenfläche angeordnet. Die aus der Gehäusefläche herausragenden Teile des ersten und zweiten Stromableiters 14 und 16 erstrecken sich parallel zu einer längsten Kante 40 des quaderförmigen Gehäuses 12. Somit ist, ähnlich wie in Fig. 2B, zur Verbindung mit den im Inneren des Gehäuses angeordneten Elektroden des Akkumulators eine besonders große Querschnittsfläche für die Strom- und Wärmeableitung von den Elektroden zu den Stromableitern möglich. Zur Herstellung von Wärmeflusskommunikation sind auf dem ersten bzw. zweiten Stromableiter 14 bzw. 16 jeweils eine erste bzw. zweite Wärmeabfuhreinrichtung 24 bzw. 26, insbesondere formschlüssig und/oder kraftschlüssig, befestigt. Die Wärmeabfuhreinrichtungen 24, 26 ragen in ihrer Längsrichtung nicht nur über die Ausdehnung der Stromableiter 14 bzw. 16 sondern auch über die Begrenzung durch eine kürzeste Kante 44 der zweitgrößten Seitenfläche 48, aus der die Stromableiter hervor. In dieser Ausführungsform ist ein Akkumulator 20 beliebig stapelbar, um Stapel von zwei oder mehreren übereinander angeordneten Akkumulatoren zu bilden. Dabei sind die über die kleinsten Gehäuseflächen 50 der Akkumulatoren 20 hinausragenden Endabschnitte der Wärmeabfuhreinrichtungen 24 bzw. 26 von außen zum Verbinden in Wärmeflusskommunikation mit einer Abfuhreinrichtung für thermische Energie (nicht gezeigt) zugänglich.

In den in Fig. 1 und 2 gezeigten Ausführungsformen des erfindungsgemäßen Akkumulators 10 bzw. 20 ist der erste Stromableiter 14 mit der Kathode des Akkumulators und der zweite Stromableiter 16 mit der Anode des Akkumulators elektrisch leitfähig verbunden.

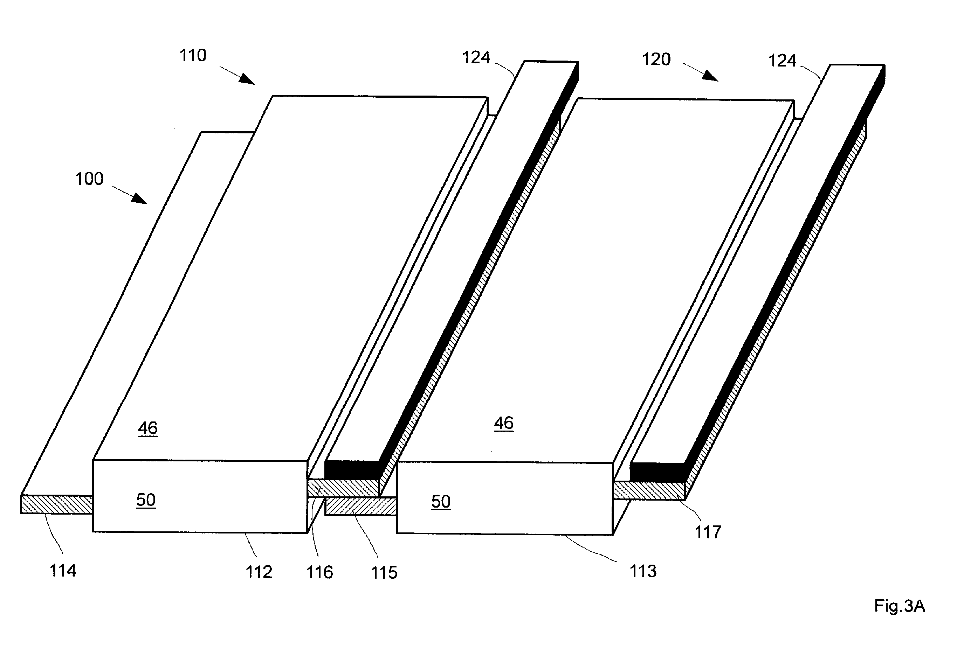

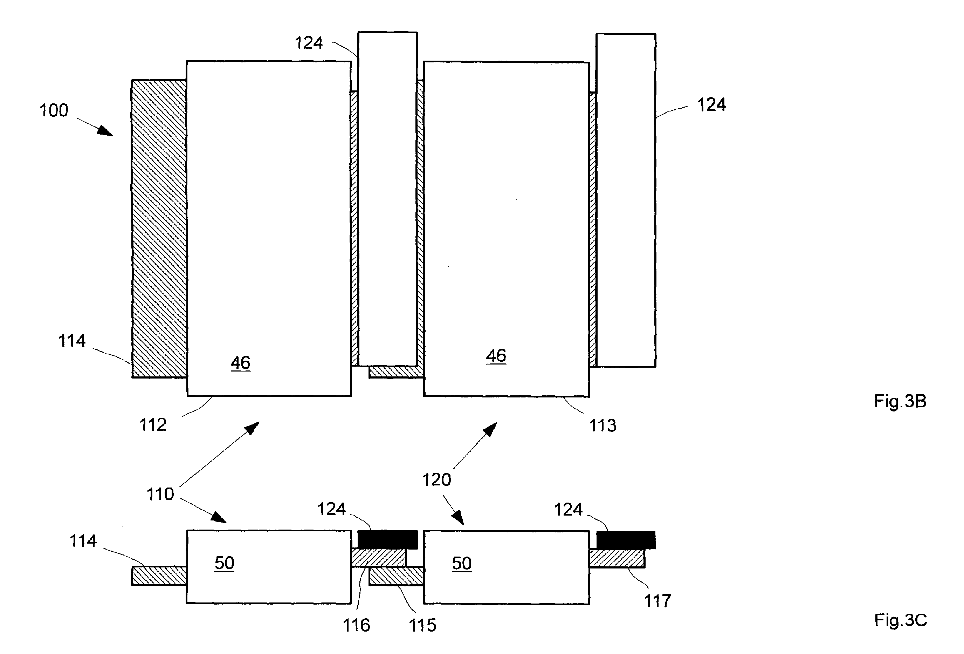

Fig. 3 zeigt einen Zusammenbau von zwei erfindungsgemäßen Akkumulatoren in der Variante der zweiten Ausführungsform aus der Fig. 2C zu einer Vorrichtung mit zwei Akkumulatoren, die Basisflachmodul genannt wird. Fig. 3A zeigt eine schematische, perspektivische Ansicht des Basisflachmoduls 100, Fig. 3B zeigt eine Aufsicht von oben auf das in Fig. 3A gezeigte Basisflachmodul 100 und Fig. 3C zeigt eine schematische Aufsicht von vorne auf das in Fig. 3A gezeigte Basisflachmodul 100. Das Basisflachmodul umfasst eine erste Einrichtung 110 und eine zweite Einrichtung 120, die jeweils im Wesentlichen baugleich zu dem in Fig. 2C gezeigten Akkumulator 20 sind. Wie in den Figuren 3A und 3C gezeigt, sind die ersten und zweiten Einrichtungen 110 und 120 in einer gemeinsamen Ebene, die parallel zu den größten Gehäuseflächen 46 der Gehäuse 112 und 113 der ersten und zweiten Einrichtung 110 und 120 ist, nebeneinander angeordnet, so dass eine Bauhöhe des Basisflachmoduls 100 der Bauhöhe einer einzelnen der Einrichtungen 110 und 120 entspricht. Im Basisflachmodul 100 sind zweitgrößte Gehäuseflächen, in Fig. 3A die rechte Seitenfläche der Einrichtung 110 und die linke Seitenfläche der Einrichtung 120, einander zugewandt angeordnet. Dadurch kommt der zweite Stromableiter 116 der ersten Einrichtung 110 dem ersten Stromableiter 115 der zweiten Einrichtung 120 sehr nahe, vorzugsweise und wie in Fig. 3A gezeigt, sogar in direkte Berührung und somit in elektrischen Kontakt damit.

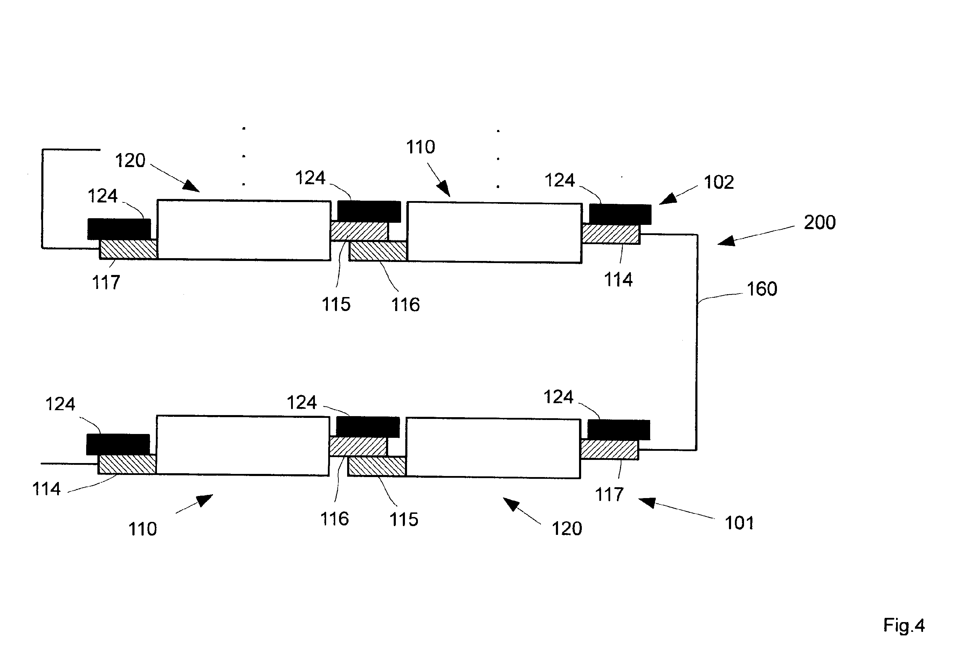

Für die in der Figur 3 und ebenso für die in den nachfolgenden Figuren 4 bis 6 gezeigten Ausführungsformen gilt, dass der erste Stromableiter 114 bzw. 115 einer jeweiligen Einrichtung 110 bzw. 120 mit der Kathode der Einrichtung und der zweite Stromableiter 116 bzw. 117 der ersten Einrichtung 110 bzw. der zweiten Einrichtung 120 mit der Anode der Einrichtung verbunden ist.

Folglich sind in dem Basisflachmodul 100 die erste Einrichtung 110 und die zweite Einrichtung 120 in einer elektrischen Hintereinander- bzw. Serienschaltung miteinander verschaltet. Der erste Stromableiter 114 der ersten Einrichtung 110 und der zweite Stromableiter 117 der zweiten Einrichtung 120 ragen an gegenüberliegenden (zweitgrößten) Seitenflächen der Gehäuse 112 bzw. 113 der ersten bzw. zweiten Einrichtung 110 bzw. 120 heraus und sind, auch wenn eine, zwei oder mehrere Basisflachmodule übereinander gestapelt werden, von außen her zum elektrischen Kontaktieren zugänglich.

Alternativ zu einem direkten elektrischen Kontakt können der zweite Stromableiter 116 der ersten Einrichtung 110 und der erste Stromableiter 115 der zweiten Einrichtung 120 auch voneinander beabstandet angeordnet werden, wobei mittels einer geeigneten elektrischen Verbindungseinrichtung eine elektrische Leitfähigkeit zwischen diesen beiden Stromableitern hergestellt wird.

Das Basisflachmodul 100 umfasst ferner mindestens eine Wärmeabfuhreinrichtung 124. Diese kann, wie in den Figuren 3A bis 3C gezeigt, in Wärmeflusskommunikation, insbesondere formschlüssig und kraftschlüssig mit der zweiten Elektrode der ersten Einrichtung 110 befestigt sein, sie kann jedoch auch formschlüssig und kraftschlüssig mit dem ersten Stromableiter 115 der zweiten Einrichtung 120, in den Figuren 3A und 3C von unten, an dem Stromableiter 115 befestigt. Die Wärmeflusskommunikation kann auch sowohl mit dem zweiten Stromableiter 116 der ersten Einrichtung 110 als auch mit dem ersten Stromableiter 115 der zweiten Einrichtung 120 verbunden sein, beispielsweise durch Zwischenlegen zwischen den beiden Stromableitern 116 und 115 in Wärmeflusskommunikation, insbesondere formschlüssig und kraftschlüssig mit diesen verbunden ist. Optional kann eine zweite Wärmeabfuhreinrichtung so vorgesehen werden, dass die erste Wärmeabfuhreinrichtung 124 mit der zweiten Stromabfuhr 116 der ersten Einrichtung 110 und die zweite Wärmeabfuhreinrichtung mit dem ersten Stromableiter 115 der zweiten Einrichtung 120 in Wärmeflusskommunikation, insbesondere formschlüssig und kraftschlüssig verbunden ist.

Wie in Fig. 3A, 3B und 3C gezeigt, kann optional eine noch weitere Wärmeabfuhreinrichtung in Wärmeflusskommunikation, insbesondere in formschlüssiger und kraftschlüssiger Verbindung, mit dem zweiten Stromableiter 117 der zweiten Einrichtung 120. Und optional kann noch eine weitere Wärmeabfuhreinrichtung in Wärmeflusskommunikation, insbesondere formschlüssiger und kraftschlüssiger Verbindung, mit dem ersten Stromableiter 114 der ersten Einrichtung 110 bereitgestellt werden.

Endbereiche der einen oder mehreren Wärmeabfuhreinrichtungen 124 ragen (in der Ansicht der Fig. 3A nach hinten) über die kleinste Gehäusefläche 50 der ersten und zweiten Einrichtungen hinaus. Somit sind, selbst wenn zwei oder mehrere Basisflachmodule 100 übereinander gestapelt sind, die Endbereiche von außen her zum Anschluss in Wärmeflusskommunikation an eine Abfuhrvorrichtung für thermische Energie zugänglich.

Fig. 4 zeigt eine Vorrichtung 200, die durch Übereinanderstapeln von zwei Basisflachmodulen 101 und 102 erhalten wird. Das zweite Basisflachmodul 102 ist so über dem ersten Basisflachmodul angeordnet, dass der erste Stromableiter 114 der ersten Einrichtung 110 des zweiten Basisflachmoduls 102 über dem zweiten Stromableiter 117 der ersten Einrichtung 110 des ersten Basisflachmoduls 101 angeordnet und damit in relativ dichter räumlicher Nähe zu diesem ist. Entsprechend ist der zweite Stromableiter 117 der zweiten Einrichtung 120 des zweiten Basisflachmoduls 102 über und in großer räumlicher Nähe zu dem ersten Stromableiter 114 der ersten Einrichtung 110 des ersten Basisflachmoduls 101 angeordnet. Ferner ist der erste Stromableiter 114 der ersten Einrichtung 110 des zweiten Basisflachmoduls 102 mit dem zweiten Stromableiter 117 der ersten Einrichtung 110 des ersten Basisflachmoduls 101 mittels einer geeigneten elektrischen Verbindungseinrichtung 160 elektrisch leitfähig verbunden. Folglich sind das erste Basisflachmodul 101 und das zweite Basisflachmodul 102 in einer elektrischen Hintereinander- bzw. Serienschaltung verschaltet. Ein drittes Basisflachmodul und beliebig viele weitere Basisflachmodule können auf die Verschaltung des ersten und zweiten Basisflachmoduls 101 und 102 gestapelt werden, wobei jeweils der erste Stromableiter 114 einer ersten Einrichtung eines benachbart oben auf den Stapel anzuordnenden Basisflachmoduls über dem zweiten Stromableiter 117 der zweiten Einrichtung 120 des bis dahin obersten Basisflachmoduls im Stapel angeordnet ist und mit diesem mittels einer elektrischen Verbindungseinrichtung 160 verbunden. So kann eine Serienschaltung von zwei, drei oder beliebig vielen mehreren Basisflachmodulen erhalten werden.

Für eine optimale Wärmeabfuhr ist in jedem Basisflachmodul der Vorrichtung 200 auf dem ersten Stromableiter 114 der ersten Einrichtung und/oder an dem zweiten Stromableiter 117 der zweiten Einrichtung 120 jeweils eine Wärmeabfuhreinrichtung 124 in Wärmeflusskommunikation, insbesondere formschlüssig und kraftschlüssig, verbunden.

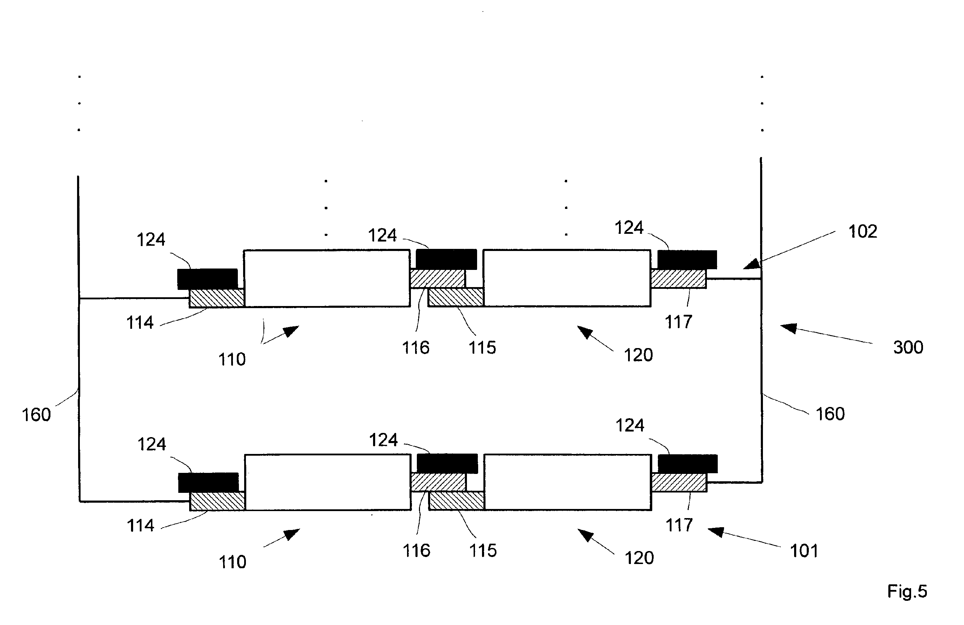

Fig. 5 zeigt eine Vorrichtung 300, die aus zwei Basisflachmodulen 101 und 102 zusammengebaut ist. Das zweite Basisflachmodul 102 ist so über dem ersten Basisflachmodul 101 angeordnet, dass der erste Stromableiter 114 der ersten Einrichtung 110 des zweiten Basisflachmoduls 102 über dem ersten Stromableiter 114 der ersten Einrichtung 110 des ersten Basisflachmoduls 101 angeordnet und mit diesem mittels einer elektrischen Verbindungseinrichtung 160 elektrisch verbunden ist, und dass der zweite Stromableiter 117 der zweiten Einrichtung 120 des zweiten Basisflachmoduls 102 über dem zweiten Stromableiter 117 der zweiten Einrichtung 120 des ersten Basisflachmoduls 101 angeordnet und mit diesem mittels einer elektrischen Verbindungseinrichtung 116 elektrisch leitfähig verbunden ist. Auf diese Weise wird eine elektrische Parallelverschaltung des ersten und zweiten Basisflachmoduls 101 und 102 erzielt.

Ein drittes und beliebig viele weitere mehrere Basisflachmodule können über dem ersten und zweiten Basisflachmodul 101 und 102 der in Fig. 5 gezeigten Vorrichtung 300 so angeordnet werden, dass jeweils die ersten Stromableiter der ersten Einrichtung eines oben auf dem Stapel hinzuzufügenden Basisflachmoduls über dem ersten Stromableiter 114 der ersten Einrichtung 101 des obersten Basisflachmoduls im Stapel und entsprechend der zweite Stromableiter der zweiten Einrichtung des auf dem Stapel hinzuzufügenden Basisflachmoduls über dem zweiten Stromableiter 117 der zweiten Einrichtung 120 des obersten, im Stapel angeordneten Basisflachmoduls angeordnet ist. Dabei werden jeweils benachbarte erste Stromableiter 114 der ersten Einrichtung eines jeweiligen Basisflachmoduls mit benachbarten ersten Stromableitern 114 der ersten Einrichtung von benachbarten Basisflachmodulen sowie die zweiten Stromableiter 124 der zweiten Einrichtungen 120 von jeweils benachbarten Basisflachmodulen mittels geeigneter elektrischer Verbindungseinrichtungen 160 miteinander elektrisch leitfähig verbunden. Dadurch entsteht in der Vorrichtung 300 eine Parallelschaltung von zwei, drei oder beliebig vielen mehreren Basisflachmodulen.

Ähnlich wie für die Vorrichtung 200 aus der Fig. 4 gilt auch für die Vorrichtung 300 aus der Fig. 5, dass jedes Basisflachmodul im Stapel drei Wärmeabfuhreinrichtungen 124 aufweisen kann. Dabei kann eine erste Wärmeeinrichtung mit dem ersten Stromableiter 114 der ersten Einrichtung 110, eine zweite Wärmeabfuhreinrichtung mit dem zweiten Stromableiter 116 der ersten Einrichtung 110 und/oder mit dem ersten Stromableiter 115 der ersten Einrichtung 120 und eine dritte Wärmeabfuhreinrichtung 124 mit dem zweiten Stromableiter 117 der zweiten Einrichtung in Wärmeflusskommunikation, insbesondere formschlüssig und kraftschlüssig, für eine optimale Wärmeabfuhr über die entsprechenden Stromableiter aus den entsprechenden Elektroden der Einrichtungen 110 bzw. 120 verbunden sein.

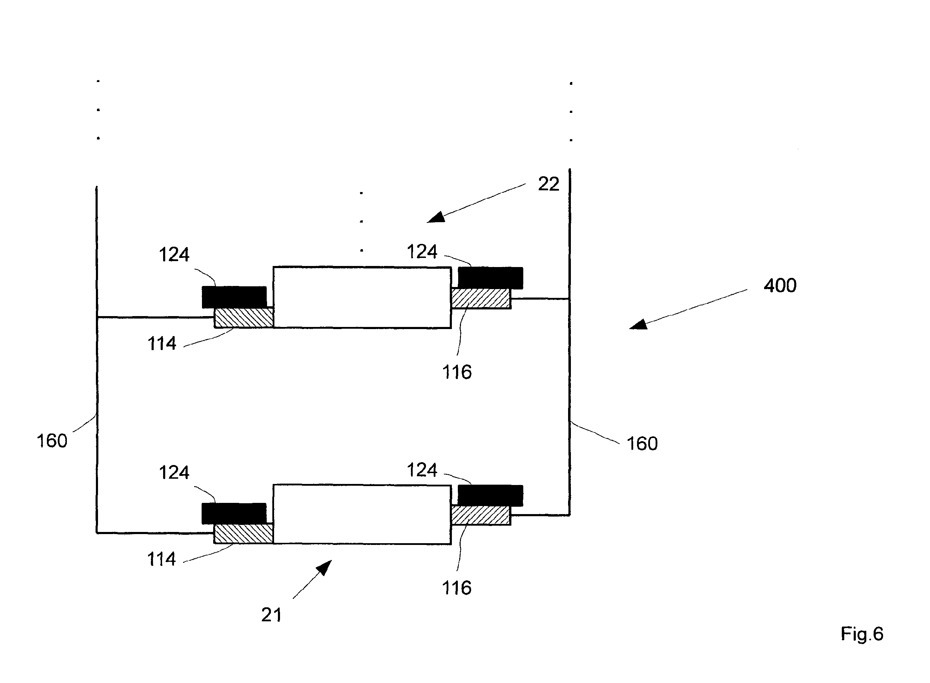

Fig. 6 zeigt einen Zusammenbau in elektrischer Parallelschaltung von zwei übereinander gestapelten nach galvanischen Prinzipien arbeitenden Einrichtungen 21 und 22. Die zweite Einrichtung 22 ist so über der ersten Einrichtung 21 angeordnet, dass der erste Stromableiter der zweiten Einrichtung 22 über dem ersten Stromableiter 114 der ersten Einrichtung 21 angeordnet ist und mit diesem mittels einer elektrischen Verbindungseinrichtung 160 elektrisch verbunden ist, und so dass der zweite Stromableiter 116 der zweiten Einrichtung 22 über dem ersten Stromableiter 116 der Einrichtung 21 angeordnet und mit diesem über eine elektrische Verbindungseinrichtung 160 elektrisch verbunden ist. Auf diesem Zusammenbau der ersten Einrichtung 21 und der zweiten Einrichtung 22 können eine dritte und beliebig viele weitere, im Wesentlichen baugleiche Einrichtungen gestapelt werden und dabei mittels elektrischer Verbindungseinrichtungen in elektrische Verbindungen jeweils benachbarter erster Stromableiter und jeweils benachbarter zweiter Stromableiter 116 untereinander eine elektrische Parallelschaltung der Einrichtungen 21, 22, ... erzielt werden. Für eine optimale Wärmeabfuhr ist jeder erste und zweite Stromableiter 114 und 116 einer jeweiligen Einrichtung 21, 22, ... in dem Stapel in Wärmeflusskommunikation, insbesondere formschlüssig und kraftschlüssig, mit einer Wärmeabfuhreinrichtung 124 verbunden.

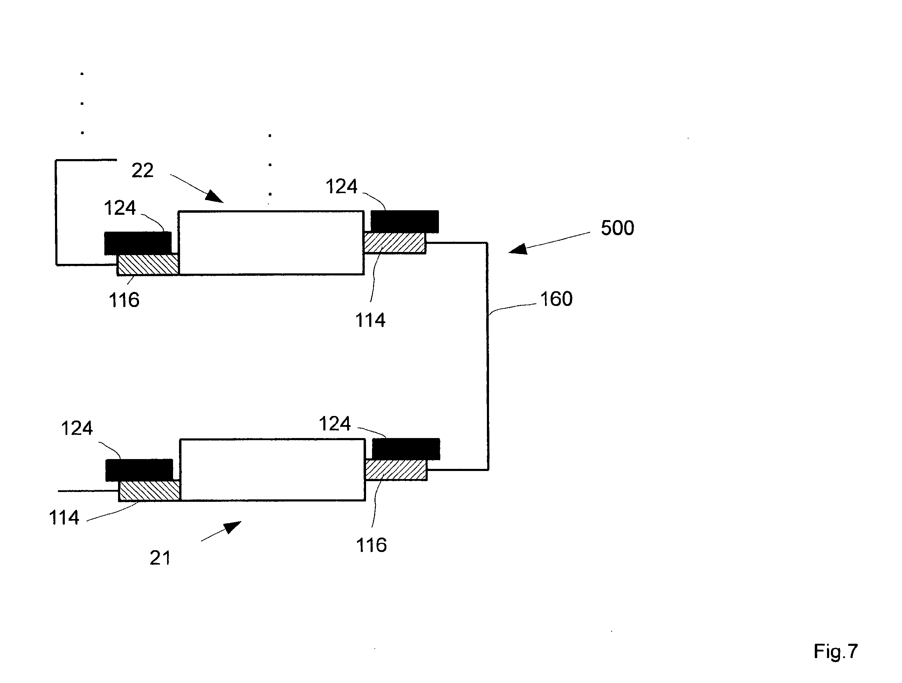

Schließlich zeigt Fig. 7 eine Vorrichtung 500 mit einer elektrischen Verschaltung von zwei übereinander angeordneten Einrichtungen 21 und 22 in Serienschaltung. Die zweite Einrichtung 22 ist so über der ersten Einrichtung 21 angeordnet, dass der erste Stromableiter 114 der zweiten Einrichtung 22 über und in großer räumlicher Nähe zu dem zweiten Stromableiter 116 der ersten Einrichtung 21 angeordnet und mit diesem mittels einer geeigneten elektrischen Verbindungseinrichtung 160 elektrisch leitfähig verbunden ist. Ferner ist der zweite Wärmeableiter 116 der zweiten Einrichtung 22 über dem ersten Stromableiter 114 der ersten Einrichtung 21 angeordnet. Die erste und zweite Einrichtung 21 und 22 sind mittels der elektrischen Verbindungseinrichtung 160 elektrisch hintereinander bzw. in einer Serienschaltung verschaltet. Durch Aufstapeln einer dritten und beliebig vieler mehrerer weiterer Einrichtungen, wobei jeweils ein erster Stromableiter einer auf dem Stapel hinzuzufügenden Einrichtung über dem zweiten Stromableiter der bis dahin obersten Einrichtung des Stapels angeordnet wird und mit dieser mittels einer elektrischen Verbindungseinrichtung 160 elektrisch leitend verbunden wird, kann eine Hintereinander- bzw. Serienschaltung von zwei, drei oder beliebig vielen mehreren Einrichtungen erzielt werden. Für eine optimale Wärmeabfuhr ist an jedem ersten und zweiten Stromableiter einer jeweiligen Einrichtung im Stapel der Einrichtungen der Vorrichtung 500 eine Wärmeabfuhreinrichtung 124 in Wärmeflusskommunikation, insbesondere formschlüssig oder kraftschlüssig, verbunden.

Aufgrund ihrer langgestreckten Form können die in den Figuren 2B, 2C und 3 bis 7 gezeigten Wärmeabfuhreinrichtungen 24, 26, 124 auch als Wärmeabfuhrfinger bezeichnet werden. Ein derartiger Wärmeabfuhrfinger ist ein einfach herzustellendes Bauteil mit einer thermischen, vorzugsweise einer hohen thermischen Leitfähigkeit. Dieses Bauteil dient zur Ableitung von Wärmeenergie von den Stromableitern. Es kann auch zur Zuleitung von Wärmeenergie zu den Stromableitern benutzt werden. Die Wärme wird somit sehr platzsparend zwischen den sich durch die Kontur der Zellen ergebenden Hohlräumen in den beispielhaft gezeigten und beanspruchten Stapelanordnungen in den Bereich der Stromableiterverbindung geleitet.

Zwischen den übereinander gestapelten Basisflachmodulen der in den Figuren 4 und 5 gezeigten Vorrichtungen 200 und 300 bzw. den einzelnen Einrichtungen 20, 21, 22 der in den Figuren 6 und 7 gezeigten Vorrichtungen 400 und 500 kann zwischen den jeweils benachbarten Basisflachmodulen bzw. Einrichtungen eine dünne elektrisch isolierende und/oder schwingungsdämpfende flexible Folie oder Schicht aufgebracht werden. Die Einrichtungen können auch in direkten Kontakt miteinander neben- und übereinander gestapelt werden.

Die Wärmeabfuhrfinger werden seitlich aus der Einrichtung 20, 110, 120 bzw. dem Basisflachmodul 100, 101, 102 bzw. den Vorrichtungen 200, 300, 400, 500 herausgeführt und mittels einer geeigneten Verbindungstechnik mit einer Abfuhreinrichtung für thermische Energie, insbesondere mit einer Wärmesenke, verbunden. Diese Abfuhreinrichtung, insbesondere Wärmesenke, nimmt aufgrund geeigneter Temperierung den Wärmefluss, der aus den nach galvanischen Prinzipien arbeitenden Einrichtungen, insbesondere galvanische Zellen, über die Stromableiter auf die Wärmeabfuhrfinger übertragen wurde, auf und entfernt sie so aus dem unmittelbaren Bereich der Einrichtungen bzw. galvanischen Zellen.

Die weitere Verschaltung einzelner Einrichtungen, wie in den Figuren 6 und 7 gezeigt, bzw. Basisflachmodule, wie in den Figuren 4 und 5 gezeigt, erfolgt so, dass sich ein Stapel ausbildet, der bis zu einer Höhe von mehreren Metern betragen kann, vorzugsweise jedoch unterhalb von einem Meter ist. Solche Stapel können zusätzlich nebeneinander oder hintereinander aufgebaut werden und entsprechend den Kapazitätsanforderungen durch elektrisch leitfähige starre oder flexible Verbindungen seriell oder parallel miteinander elektrisch verschaltet werden.

Sämtliche in den Anmeldungsunterlagen offenbarten Merkmale werden als für die Erfindung wesentlich beansprucht, sofern sie einzeln oder in Kombination gegenüber dem Stand der Technik neu sind.

### Bezugszeichenliste

- 10: Einrichtung (z.B. mit zylindrischem Gehäuse)
- 12: Gehäuse
- 14: erster Stromableiter
- 16: zweiter Stromableiter
- 18: Endfläche
- 20: Einrichtung (z.B. mit quaderförmigem Gehäuse)
- 21: erste Einrichtung 20
- 22: zweite Einrichtung 20
- 24: erste Wärmeabfuhreinrichtung
- 26: zweite Wärmeabfuhreinrichtung
- 32: erste Gehäusefläche
- 34: zweite Gehäusefläche
- 36: dritte Gehäusefläche
- 38: vierte Gehäusefläche
- 40: längste Kante
- 42: zweitlängste Kante
- 44: kürzeste Kante
- 46: größte Gehäusefläche
- 48: zweitgrößte Gehäusefläche
- 50: kleinste Gehäusefläche
- 100: Basisflachmodul
- 101: erstes Basisflachmodul 100
- 102: zweites Basisflachmodule 100
- 110: erste Einrichtung 20
- 120: zweite Einrichtung 20
- 112: erstes Gehäuse 12
- 113: zweites Gehäuse 12
- 114: erster Stromableiter (einer ersten Einrichtung)
- 115: erster Stromableiter (einer zweiten Einrichtung)
- 116: zweiter Stromableiter (einer ersten Einrichtung)
- 117: zweiter Stromableiter (einer zweiten Einrichtung)
- 124: Wärmeabfuhreinrichtung
- 160: elektrische Verbindungseinrichtung
- 200: Vorrichtung (für Parallelschaltung von Basisflachmodulen 101, 102)
- 300: Vorrichtung (für Serienschaltung von Basisflachmodulen 101, 102)
- 400: Vorrichtung (für Parallelschaltung von Einrichtungen 20)
- 500: Vorrichtung (für Serienschaltung von Einrichtungen 20)

## Patentansprüche

1. Einrichtung (10, 20), die nach galvanischen Prinzipien arbeitet, wie insbesondere eine Batterie bzw. ein Akkumulator, insbesondere eine Lithiumionenbatterie, mit
einem Gehäuse (12),
mindestens einem ersten Stromableiter (14), der aus dem Gehäuse (12) herausragt,
**gekennzeichnet durch**
mindestens eine erste Wärmeabfuhreinrichtung (24), die in Wärmeflusskommunikation mit dem ersten Stromableiter (14) verbunden ist und so ausgebildet ist, dass sie thermische Energie von dem ersten Stromableiter (14) ableiten kann.

2. Einrichtung (10, 20) nach Anspruch 1, **gekennzeichnet durch** mindestens einem zweiten Stromableiter (16), der aus dem Gehäuse (12) herausragt, und mindestens eine zweite Wärmeabfuhreinrichtung (26), die in Wärmeflusskommunikation mit dem zweiten Stromableiter (16) verbunden ist und so ausgebildet ist, dass sie thermische Energie von dem zweiten Stromableiter (16) ableiten kann.

3. Einrichtung (10, 20) nach Anspruch 2, **dadurch gekennzeichnet, dass** der erste Stromableiter (14) aus einer ersten Gehäusefläche (32) des Gehäuses (12) herausragt, der zweite Stromableiter (16) aus einer zweiten Gehäusefläche (34) des Gehäuses (12) herausragt, und die zweite Gehäusefläche (34) gegenüber liegend zu der ersten Gehäusefläche (32) angeordnet ist.

4. Einrichtung (10, 20) nach einem der Ansprüche 1 bis 3, **dadurch gekennzeichnet, dass** die erste bzw. zweite Wärmeabfuhreinrichtung (24 bzw. 26) formschlüssig und/oder kraftschlüssig mit dem ersten bzw. zweiten Stromableiter (14 bzw. 16) verbunden ist.

5. Einrichtung (10, 20) nach einem der Ansprüche 1 bis 4, **dadurch gekennzeichnet, dass** zumindest der aus dem Gehäuse (12) herausragende Teil des ersten Stromableiters (14) eine langgestreckte Form aufweist.

6. Basisflachmodul (100) einer nach galvanischen Prinzipien arbeitenden Vorrichtung umfassend:
eine ersten nach galvanischen Prinzipien arbeitende Einrichtung (110), die ein erstes Gehäuse (112) mit einer im Wesentlichen quaderförmigen Form, einen ersten Stromableiter (114), der aus einer ersten Seitenfläche oder ersten Endfläche des ersten Gehäuses (112) herausragt, und einen zweiten Stromableiter (116), der aus einer der ersten gegenüberliegenden zweiten Seitenfläche oder zweiten Endfläche des ersten Gehäuses (112) herausragt, aufweist, und
eine zweite nach galvanischen Prinzipien arbeitenden Einrichtung (120), die ein zweites Gehäuse (113) mit einer im Wesentlichen quaderförmigen Form, einen ersten Stromableiter (115), der aus einer ersten Seitenfläche oder ersten Endfläche des zweiten Gehäuses (113) herausragt, und einen zweiten Stromableiter (117), der aus einer der ersten gegenüberliegenden zweiten Seitenfläche oder zweiten Endfläche des zweiten Gehäuses (113) herausragt, aufweist,
wobei die erste und zweite Einrichtung (110, 120) so angeordnet sind, dass das erste Gehäuse (112) der ersten Einrichtung (110) in einer gemeinsamen Ebene mit dem zweiten Gehäuse (113) der zweiten Einrichtung (120) so angeordnet ist, dass das Gehäuse der ersten Einrichtung in einer gemeinsamen Ebene mit dem Gehäuse der zweiten Einrichtung so angeordnet ist, dass die Gehäusefläche der ersten Einrichtung, aus der der zweite Stromableiter der ersten Einrichtung herausragt, der Gehäusefläche der zweiten Einrichtung, aus der der erste Stromableiter der zweiten Einrichtung herausragt, zugewandt ist, wobei vorzugsweise der zweite Stromableiter (116) der ersten Einrichtung (110) mit dem ersten Stromableiter (115) der zweiten Einrichtung (120) in elektrischem Kontakt verbunden ist, **gekennzeichnet durch**
eine Wärmeabfuhreinrichtung (124), die in Wärmeflusskommunikation mit dem zweiten Stromableiter (116) der ersten Einrichtung (110) oder mit dem ersten Stromableiter (115) der zweiten Einrichtung (120) verbunden ist, zum Ableiten von thermischer Energie.

7. Basisflachmodul (100) nach Anspruch 6, **dadurch gekennzeichnet, dass** die zweite Einrichtung (120) im Wesentlichen baugleich zu der ersten Einrichtung (110) ist.

8. Basisflachmodul (100) nach Anspruch 6 oder 7, **dadurch gekennzeichnet, dass** der zweite Stromableiter (116) der ersten Einrichtung (110) und der erste Stromableiter (115) der zweiten Einrichtung (120) in, vorzugweise flächigem, elektrischem Kontakt miteinander, vorzugsweise formschlüssig oder kraftschlüssig, verbunden sind.

9. Basisflachmodul (100) nach einem der Ansprüche 6 bis 8, **dadurch gekennzeichnet, dass** die Wärmeabfuhreinrichtung (124) formschlüssig und/oder kraftschlüssig mit dem zweiten Stromableiter (116) der ersten Einrichtung (110) oder mit dem ersten Stromableiter (115) der zweiten Einrichtung (120) verbunden ist.

10. Basisflachmodul (100) nach einem der Ansprüche 6 bis 9, **dadurch gekennzeichnet, dass** der erste Stromableiter (114) der ersten Einrichtung (110) mit einer Kathode der ersten Einrichtung verbunden ist und der zweite Stromableiter (117) der zweiten Einrichtung (120) mit einer Anode der zweiten Einrichtung verbunden ist.

11. Vorrichtung (200), die nach galvanischen Prinzipien arbeitet, umfassend: ein erstes Basisflachmodul (101), insbesondere nach einem der Ansprüche 6 bis 10 und ein zweites Basisflachmodul (102), insbesondere nach einem der Ansprüche 6 bis 10, wobei das zweite Basisflachmodul (102) über dem ersten Basisflachmodul (101) angeordnet ist und wobei der erste Stromableiter (114) der ersten Einrichtung (110) des zweiten Basisflachmoduls (102) über dem ersten Stromableiter (114) der ersten Einrichtung (110) des ersten Basisflachmoduls (101) und der zweite Stromableiter (117) der zweiten Einrichtung (120) des zweiten Basisflachmoduls (102) über dem zweiten Stromableiter (117) der zweiten Einrichtung (120) des ersten Basisflachmoduls (110) angeordnet ist.

12. Vorrichtung nach Anspruch 11, **dadurch gekennzeichnet, dass** sie so ausgebildet ist, dass durch Herstellen einer elektrischen Verbindung mittels einer geeigneten elektrischen Verbindungseinrichtung (160) zwischen dem ersten Stromableiter (114) der ersten Einrichtung (110) des zweiten Basisflachmoduls (102) und dem ersten Stromableiter (114) der ersten Einrichtung (110) des ersten Basisflachmoduls (101) sowie einer elektrischen Verbindung mittels einer geeigneten elektrischen Verbindungseinrichtung (160) zwischen dem zweiten Stromableiter (117) der zweiten Einrichtung (120) des zweiten Basisflachmoduls (102) und dem zweiten Stromableiter (117) der zweiten Einrichtung (120) des ersten Basisflachmoduls (101) eine Parallelschaltung der Basisflachmodule (101, 102) gebildet werden kann.

13. Vorrichtung nach Anspruch 11 oder 12, **dadurch gekennzeichnet, dass** der zweite Stromableiter (117) der zweiten Einrichtung (120) des zweiten Basisflachmoduls (102) mit dem zweiten Stromableiter (117) der zweiten Einrichtung (120) des ersten Basisflachmoduls (101) mittels einer elektrischen Verbindungseinrichtung (160) verbunden ist.

14. Vorrichtung (200) nach einem der Ansprüche 11 bis 13, **gekennzeichnet durch** mindestens ein weiteres Basisflachmodul oder eine Vielzahl weiterer Basisflachmodule nach einem der Ansprüche 6 bis 10,
wobei die Basisflachmodule so übereinander angeordnet sind, dass für jeweils benachbarte Basisflachmodule der erste Stromableiter der ersten Einrichtung des oberen Basisflachmoduls über dem ersten Stromableiter der ersten Einrichtung des benachbart darunter angeordneten Basisflachmoduls und der zweite Stromableiter der zweiten Einrichtung des oberen Basisflachmoduls über dem zweiten Stromableiter der zweiten Einrichtung des benachbart darunter angeordneten Basisflachmoduls angeordnet ist.

15. Vorrichtung (200) nach einem der Ansprüche 11 bis 14, **dadurch gekennzeichnet, dass** die ersten Stromableiter der ersten Einrichtung eines jeweiligen Basisflachmoduls mit dem ersten Stromableiter der ersten Einrichtung eines jeweils benachbarten Basisflachmoduls mittels einer elektrischen Verbindungseinrichtung verbunden ist und dass die zweiten Stromableiter der zweiten Einrichtung eines jeweiligen Basisflachmoduls mit dem zweiten Stromableiter der zweiten Einrichtung eines jeweils benachbarten Basisflachmoduls mittels einer elektrischen Verbindungseinrichtung verbunden ist, so dass eine Parallelschaltung der Basisflachmodule gebildet wird.
